(19) **Europäisches Patentamt / European Patent Office / Office européen des brevets**

(11) **EP 3 542 533 B1**

(12) # FASCICULE DE BREVET EUROPEEN

(45) Date de publication et mention de la délivrance du brevet:
**08.11.2023   Bulletin 2023/45**

(21) Numéro de dépôt: **17808551.0**

(22) Date de dépôt: **13.11.2017**

(51) Classification Internationale des Brevets (IPC):
**H04N 19/597** *(2014.01)*   **H04N 13/00** *(2018.01)*
**H04N 21/218** *(2011.01)*   **H04N 19/105** *(2014.01)*
**H04N 19/172** *(2014.01)*   **H04N 19/46** *(2014.01)*
**H04N 19/162** *(2014.01)*

(52) Classification Coopérative des Brevets (CPC):
**H04N 19/597; H04N 19/105; H04N 19/162;**
**H04N 19/172; H04N 19/46;** H04N 13/161;
H04N 21/21805

(86) Numéro de dépôt international:
**PCT/FR2017/053091**

(87) Numéro de publication internationale:
**WO 2018/091812 (24.05.2018 Gazette 2018/21)**

(54) **PROCÉDÉ ET DISPOSITIF DE CODAGE ET DE DÉCODAGE D'UNE SÉQUENCE MULTI-VUES**

VERFAHREN UND VORRICHTUNG ZUR CODIERUNG UND DECODIERUNG VON MEHRFACHANSICHTSSEQUENZEN

METHOD AND DEVICE FOR CODING AND DECODING A MULTI-VIEW SEQUENCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **15.11.2016   FR 1661027**

(43) Date de publication de la demande:
**25.09.2019   Bulletin 2019/39**

(73) Titulaire: **Orange**
**92130 Issy-les-Moulineaux (FR)**

(72) Inventeurs:
• **JUNG, Joël**
  **92326 Châtillon Cedex (FR)**
• **DRICOT, Antoine**
  **92326 Châtillon Cedex (FR)**
• **CAGNAZZO, Marco**
  **91190 Gif sur Yvette (FR)**
• **PESQUET-POPESCU, Béatrice**
  **77700 Bailly Romainvilliers (FR)**

(56) Documents cités:
• **DAI WEI ET AL: "Merge Frame Design for Video Stream Switching Using Piecewise Constant Functions", IEEE TRANSACTIONS ON IMAGE PROCESSING, IEEE SERVICE CENTER, PISCATAWAY, NJ, US, vol. 25, no. 8, 1 août 2016 (2016-08-01), pages 3489-3504, XP011614102, ISSN: 1057-7149, DOI: 10.1109/TIP.2016.2571564 [extrait le 2016-06-14]**
• **YANWEI LIU ET AL: "Low-delay View Random Access for Multi-view Video Coding", CIRCUITS AND SYSTEMS, 2007. ISCAS 2007. IEEE INTERNATIONAL SYMPOSIUM O N, IEEE, PI, 1 mai 2007 (2007-05-01), pages 997-1000, XP031181431, ISBN: 978-1-4244-0920-4**
• **NGAI-MAN CHEUNG ET AL: "Distributed Source Coding Application to Low-Delay Free Viewpoint Switching in Multiview Video Compression (Abstract)", 26. PICTURE CODING SYMPOSIUM;7-11-2007 - 9-11-2007; LISBON,, 7 novembre 2007 (2007-11-07), XP030080396,**

- XUN GUO ET AL: "Free viewpoint switching in multi-view video streaming using Wyner-Ziv video coding", SPIE - INTERNATIONAL SOCIETY FOR OPTICAL ENGINEERING. PROCEEDINGS, vol. 6077, 15 janvier 2006 (2006-01-15), page 60770U, XP055385242, US ISSN: 0277-786X, DOI: 10.1117/12.650662 ISBN: 978-1-5106-0753-8
- LING ZHU ET AL: "Inter-view-predicted redundant pictures for viewpoint switching in multiview video streaming", ACOUSTICS SPEECH AND SIGNAL PROCESSING (ICASSP), 2010 IEEE INTERNATIONAL CONFERENCE ON, IEEE, PISCATAWAY, NJ, USA, 14 mars 2010 (2010-03-14), pages 746-749, XP031696999, ISBN: 978-1-4244-4295-9
- KI-KIT LAI ET AL: "Viewpoint switching in multiview videos using SP-frames", 15TH IEEE INTERNATIONAL CONFERENCE ON IMAGE PROCESSING : ICIP 2008 ; SAN DIEGO, CALIFORNIA, USA, 12 - 15 OCTOBER 2008, IEEE, PISCATAWAY, NJ, USA, 12 octobre 2008 (2008-10-12), pages 1776-1779, XP031374367, DOI: 10.1109/ICIP.2008.4712120 ISBN: 978-1-4244-1765-0

**Description**

1. Domaine de l'invention

La présente invention se rapporte de manière générale au domaine du traitement d'images 3D, et plus précisément au codage et au décodage de séquences d'images multi-vues, dans le cas d'une navigation libre au sein d'une séquence d'images multi-vues.

2. Art Antérieur

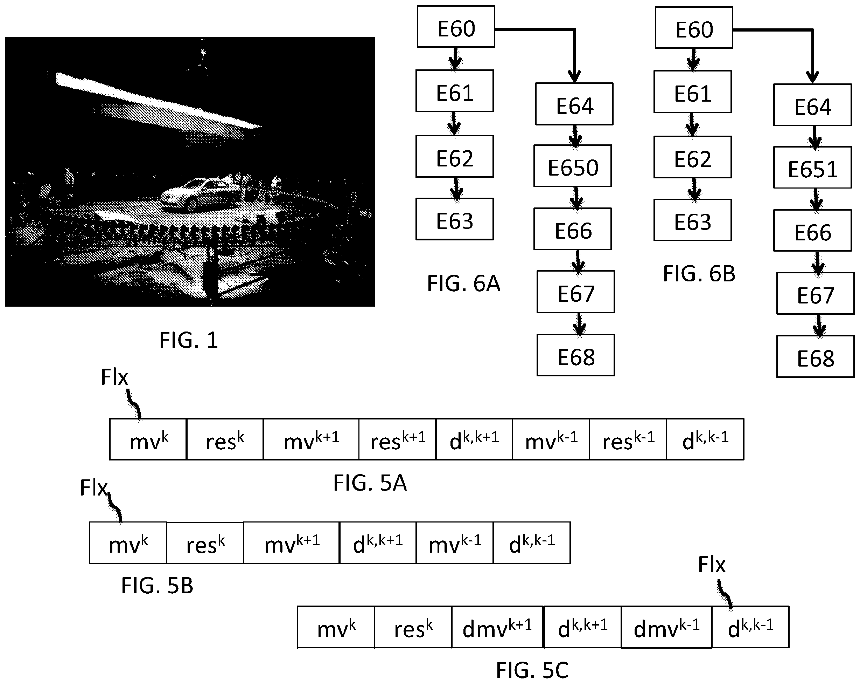

La figure 1 présente un exemple d'un dispositif d'acquisition d'une séquence d'images multi-vues, ou séquence vidéo multi-vues représentative d'une scène 3D. Un tel dispositif comprend un ensemble de caméras positionnées de sorte à ce que chacune des caméras acquiert une séquence d'images représentative d'une vue de la scène. Lorsque le nombre de vues est grand, par exemple supérieur à 10, on parle de séquence d'images super-multi-vues.

Chaque séquence d'images acquise par une des caméras du dispositif, communément appelée vue, peut être codée dans un flux de données.

L'ensemble des vues ou séquences d'images acquises par les caméras du dispositif forme une vidéo multi-vues ou super-multi-vues, dans laquelle il est possible de naviguer librement lors de la restitution de la vidéo selon l'axe des vues et/ou selon l'axe temporel en fonction des vues demandées par un utilisateur. Une telle fonctionnalité est également connue sous le nom de "Free Navigation" en anglais.

En effet, à partir d'une vue courante initialement affichée, il est possible de parcourir pendant le défilement de la vidéo, des images d'une vue à gauche ou à droite d'une vue courante selon la demande de l'utilisateur, la vue affichée devenant alors la vue courante. L'utilisateur peut arrêter le défilement de la vidéo et parcourir les images des différentes vues correspondant à l'instant de l'arrêt du défilement.

Afin d'assurer une efficacité en terme de compression, le codage des vues exploite des corrélations temporelles entre les images d'une même vue et des corrélations inter-vues. Ainsi, pour décoder une vue à un instant temporel, il peut être nécessaire de décoder plusieurs vues. Par exemple, un codeur vidéo 3D tel que le standard 3D-HEVC exploite les corrélations temporelles et inter-vues pour avoir une bonne efficacité de codage. Cependant, un tel standard nécessite le décodage systématique de l'ensemble des vues. Un tel codeur n'est donc pas adapté à la fonctionnalité de navigation libre dans une vidéo super multi-vues. En effet, afin de limiter la complexité de décodage pour le dispositif de restitution, par exemple une tablette, un téléphone mobile ou autre, il est nécessaire de limiter le nombre de vues, i.e. de séquences d'images, à décoder à chaque instant lors de la restitution.

Un inconvénient est que, lors du codage, les chemins ou parcours à suivre lors de la visualisation sont inconnus puisque le parcours des vues au cours du temps de la vidéo est laissé libre à l'utilisateur. Ceci pose des contraintes fortes pour le codeur et le décodeur. En effet, parmi N vues codées par un codeur, seulement certaines d'entre elles seront affichées à l'utilisateur.

Une solution simple pour offrir la fonctionnalité de navigation libre dans la vidéo tout en limitant le nombre de vues à décoder consiste à coder chaque image de chaque vue à l'aide d'un codeur d'images fixes, tels que JPEG, JPEG 2000, ou d'appliquer un codage Intra à l'aide d'un codeur vidéo tel que H.264. Cependant, une telle solution est coûteuse en termes de débit de la vidéo encodée. Il est donc préférable d'utiliser un codeur vidéo utilisant une prédiction temporelle des images de chaque vue pour avoir un bon compromis coût de codage/complexité de décodage.

Certains systèmes utilisent un dialogue entre un serveur et le terminal de l'utilisateur afin de prédire les vues qui seront demandées par l'utilisateur, notamment en fonction des déplacements de l'utilisateur selon l'axe temporel et l'axe des vues. Cependant, de tels systèmes nécessitent une communication temps réel avec le serveur et des ressources adaptées au niveau du serveur.

Il est connu du standard vidéo H.264 de coder des images dites "SI frames" et "SP frames" permettant de reconstruire une même image à partir d'une image de référence différente de l'image de référence utilisée au codage. Une telle technique permet de passer d'un flux vidéo à un autre flux vidéo, par exemple dans le cas d'une adaptation du débit de transmission de la vidéo. Cependant, une telle technique ne permet d'insérer des images de changement de flux qu'à intervalles réguliers au cours du temps sous peine de pénaliser fortement le coût de codage de la vidéo. Une telle technique n'est donc pas adaptée pour coder une vidéo multi-vues tout en offrant une fonctionnalité de navigation libre, i.e. offrant la possibilité de changer de vue à n'importe quel instant de la vidéo.

DAI WEI ET AL: "Merge Frame Design for Video Stream Switching Using Piecewise Constant Functions", IEEE TRANSACTIONS ON IMAGE PROCESSING, IEEE SERVICE CENTER, PISCATAWAY, NJ, US, vol. 25, no. 8, 1 août 2016 (2016-08-01), pages 3489-3504, XP011614102, ISSN: 1057-7149, DOI: 10.1109/ TIP.2016.2571564 [extrait le 2016-06-14] divulgue un changement de vues, où une trame est insérée qui mélange des trames SI.

YANWEI LIU ET AL: "Low-delay View Random Access for Multi-view Video Coding", CIRCUITS AND SYSTEMS, 2007. ISCAS 2007. IEEE INTERNATIONAL SYMPOSIUM O N, IEEE, PI, 1 mai 2007 (2007-05-01), pages 997-1000, XP031181431, ISBN: 978-1-4244-0920-4 divulgue un accès aléatoire de vues avec une représentation secondaire pour corriger la dérive entre l'encodeur et le décodeur. Un signal de décalage est codé sans perte afin de compenser les différences entre deux représentations d'une même image.

GAI-MAN CHEUNG ET AL: "Distributed Source Coding Application to Low-Delay Free Viewpoint Switching in Multiview Video Compression (Abstract)", 26. PICTURE CODING SYMPOSIUM;7-11-2007 - 9-11-2007; LISBON,, 7 novembre 2007 (2007-11-07), XP030080396 divulgue l'encodage pour un changement de vue, avec l'encodage de tous les résidus possibles obtenus. Pour réduire le décalage entre les images reconstruites à partir de différentes images de référence, une technique d'encodage vidéo distribué est utilisé.

3. Exposé de l'invention

L'invention vient améliorer l'état de la technique.

Elle concerne, dans un premier mode de réalisation, un procédé de décodage d'un flux de données codées représentatif d'une vidéo comprenant au moins une première vue et une deuxième vue différente de la première vue, tel que défini dans la revendication 1.

L'invention concerne également, dans un deuxième mode de réalisation, un procédé de décodage d'un flux de données codées représentatif d'une vidéo comprenant au moins une première vue et une deuxième vue différente de la première vue, tel que défini dans la revendication 2.

Selon l'invention, une image courante d'une première vue peut être reconstruite au décodeur quelle que soit l'image de référence disponible au décodeur. En d'autres termes, quelle que soit la vue précédemment décodée par le décodeur, une image d'une autre vue, la première vue, peut être reconstruite de manière identique que lorsque l'image de référence disponible au décodeur est une image de référence de la première vue.

Un tel procédé de décodage procure l'avantage d'offrir une fonctionnalité de navigation libre tout en offrant un bon compromis entre la complexité de décodage et l'efficacité en compression du codeur. En effet, un tel procédé de décodage permet d'obtenir des performances en compression supérieures à celles d'un codage intra de l'ensemble des images de la vidéo multi-vues.

De plus, la complexité au décodage est réduite. Le procédé de décodage selon l'invention ne nécessite le décodage que d'une seule vue à chaque instant de la vidéo.

Le codage et le décodage d'une vidéo multi-vues offrant la fonctionnalité de navigation libre sont simples. En effet, chaque vue est codée de manière classique par prédiction temporelle, puis des informations additionnelles de changement de vue représentative d'une différence entre deux vues deux à deux, sont codées par prédiction inter-vues afin de réduire leur coût de codage.

Selon le premier mode de réalisation de l'invention, l'information de différence correspond à une différence qui a été calculée lors du codage du bloc courant, entre un premier bloc courant reconstruit qui a été obtenu à partir d'une image de référence de la première vue et à partir d'une information de mouvement représentative d'un déplacement dudit bloc courant dans l'image de référence de la première vue et un deuxième bloc courant reconstruit qui a été obtenu à partir d'une image de référence de la deuxième vue et à partir de l'information de mouvement représentative d'un déplacement du bloc courant dans l'image de référence de la deuxième vue.

Selon le deuxième mode de réalisation de l'invention, l'information de différence correspond à une différence qui a été calculée lors du codage du bloc courant, entre un bloc de prédiction de l'image de référence de la première vue obtenu à partir d'une information de mouvement représentative d'un déplacement dudit bloc courant dans l'image de référence de la première vue et un bloc de prédiction de l'image de référence de la deuxième vue obtenu à partir de l'information de mouvement représentative d'un déplacement dudit bloc courant dans l'image de référence de la deuxième vue.

Selon ce deuxième mode de réalisation de l'invention, le débit nécessaire pour transmettre l'information de différence est réduit.

Selon un mode particulier de réalisation du deuxième mode de réalisation de l'invention, le bloc de prédiction de l'image de référence de la première vue et le bloc de prédiction de l'image de référence de la deuxième vue sont soumis à une quantification inverse d'une quantification appliquée au bloc courant durant le codage du bloc courant.

Ainsi, selon ce mode particulier de réalisation du deuxième mode de réalisation de l'invention, l'information de différence correspond à une différence entre lesdits deux blocs de prédiction qui ont été préalablement quantifiés. Ainsi, la quantité de données de l'information représentative de la différence entre ces deux blocs de prédiction est encore réduite.

Selon un autre mode particulier de réalisation du deuxième mode de réalisation de l'invention, un paramètre est soustrait de ladite information de différence décodée.

Ainsi, selon ce mode particulier de réalisation du deuxième mode de réalisation de l'invention, grâce à une telle soustraction, la quantité de données de l'information de différence entre les deux blocs de prédiction est réduite.

Selon un autre mode particulier de réalisation du deuxième mode de réalisation de l'invention, le procédé de décodage comprend en outre le décodage d'une information représentative dudit paramètre.

Selon ce mode particulier de réalisation de l'invention, la soustraction à appliquer au décodage peut ainsi être adaptée en fonction du contenu de la séquence vidéo ou des deux blocs de prédiction entre lesquels l'information de différence est calculée.

Ainsi, le calcul du paramètre soustrait au décodeur peut être optimisé au niveau de l'encodeur de sorte à réduire le coût de l'information de différence.

Selon un autre mode particulier de réalisation des premier et/ou deuxième modes de réalisation de l'invention, la première vue est une vue précédente ou suivante de la deuxième vue selon une position prédéterminée des vues dans la vidéo.

Selon ce mode particulier de réalisation de l'invention, il n'est nécessaire de transmettre une information représentative d'une différence et des champs de mouvement inter-vues que pour des vues consécutives selon la position des vues dans la vidéo. Ainsi, il suffit de coder une information représentative d'une différence et les champs de mouvement correspondant entre une vue courante et la vue à gauche de la vue courante, et entre la vue courante et la vue à droite de la vue courante. Ainsi, la quantité d'informations additionnelles (information de différence, information de mouvement) est diminuée, tout en conservant la fonctionnalité de navigation libre.

En effet, les vues à gauche, respectivement à droite, situées au-delà de la vue à gauche de la vue courante, respectivement situées au-delà de la vue à droite de la vue courante, pourront être reconstruites par reconstruction successives des vues intermédiaires à partir de la vue courante. Selon ce mode de réalisation particulier, une vue intermédiaire peut être reconstruite à chaque instant temporel.

Selon un autre mode particulier de réalisation des premier et/ou deuxième modes de réalisation de l'invention, l'obtention de ladite information de mouvement associée audit bloc courant comprend:

- le décodage d'une première information de mouvement représentative d'un déplacement dans l'image de référence précédemment reconstruite de la deuxième vue d'un bloc de référence dudit bloc courant, ledit bloc de référence correspondant audit bloc courant déplacé dans une image de référence de la première vue,
- le décodage d'une deuxième information de mouvement représentative d'un déplacement dudit bloc courant dans ladite image de référence de la première vue,
- l'ajout de la première et de la deuxième information de mouvement.

Ce mode particulier de réalisation de l'invention permet de réduire le coût de codage du mouvement estimé par référence à l'image de référence de la deuxième vue.

Selon un autre aspect, l'invention concerne aussi un dispositif de décodage mettant en oeuvre le procédé de décodage de la revendication 1.

Selon un autre aspect, l'invention concerne aussi un dispositif de décodage mettant en oeuvre le procédé de décodage de la revendication 2.

Selon un mode particulier de réalisation de l'invention, un tel dispositif de décodage est compris dans un terminal.

Selon un autre aspect, l'invention concerne aussi un procédé de codage d'une vidéo comprenant au moins une première vue et une deuxième vue différente de la première vue, tel que défini dans la revendication 10, selon un premier mode de réalisation. Un tel procédé de codage correspond au procédé de codage de la revendication 1.

Selon un autre aspect, l'invention concerne aussi un procédé de codage d'une vidéo comprenant au moins une première vue et une deuxième vue différente de la première vue, tel que défini dans la revendication 12, selon un deuxième mode de réalisation. Un tel procédé de codage correspond au procédé de codage de la revendication 2.

Le procédé de codage selon l'invention permet ainsi au décodeur de reconstruire une image courante de la première vue même lorsqu'une image de référence précédemment reconstruite de la première vue n'est pas disponible au décodeur. Le procédé de codage selon l'invention permet ainsi de reconstruire une image courante de la première vue à partir d'une image de référence précédemment reconstruite de la deuxième vue.

Selon un mode particulier de réalisation des premier et/ou deuxième modes de réalisation de l'invention, la deuxième vue est une vue précédente ou suivante de la première vue selon une position prédéterminée des vues dans la vidéo.

Selon un autre mode particulier de réalisation, dans le premier mode de réalisation du procédé de codage de l'invention, l'information de différence calculée entre le premier bloc reconstruit et le deuxième bloc courant reconstruit est obtenue par la sélection d'un mode parmi les modes suivants, en fonction d'un critère débit-distorsion:

- codage d'un signal représentatif du résultat de la soustraction du deuxième bloc courant reconstruit du premier bloc courant reconstruit,
- codage d'un signal représentatif du résultat de la soustraction du premier bloc courant reconstruit du deuxième bloc courant reconstruit,

ledit procédé de codage comprenant le codage d'une information représentative du mode sélectionné.

Selon un autre mode particulier de réalisation, dans le deuxième mode de réalisation du procédé de codage de l'invention, l'information de différence calculée entre le bloc de prédiction de l'image de référence de la première vue et le bloc de prédiction de l'image de référence de la deuxième vue est obtenue par la sélection d'un mode parmi les modes suivants, en fonction d'un critère débit-distorsion:

- codage d'un signal représentatif du résultat de la soustraction du bloc de prédiction de l'image de référence de la deuxième vue du bloc de prédiction de l'image de référence de la première vue,
- codage d'un signal représentatif du résultat de la soustraction du bloc de prédiction de l'image de référence de la première vue du bloc de prédiction de l'image de référence de la deuxième vue,

ledit procédé de codage comprenant le codage d'une information représentative du mode sélectionné.

Selon un autre aspect, l'invention concerne aussi un dispositif de codage mettant en oeuvre le procédé de codage de la revendication 10.

Selon un autre aspect, l'invention concerne aussi un dispositif de codage mettant en oeuvre le procédé de codage de la revendication 12.

Selon un mode particulier de réalisation de l'invention, un tel dispositif de codage est compris dans un terminal ou un serveur.

L'invention concerne également un flux de données codées conformément au procédé de codage de la revendication 10 ou de la revendication 12.

Selon un mode particulier de réalisation de l'invention, les procédés de décodage, respectivement les procédés de codage, sont mis en oeuvre par un programme d'ordinateur. L'invention concerne également un programme d'ordinateur comportant des instructions pour la mise en oeuvre des procédés de décodage ou des procédés de codage selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable. L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc en anglais) ou un disque dur. D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, les supports d'enregistrement peuvent correspondre à un circuit intégré dans lequel le programme est incorporé, le circuit étant adapté pour exécuter ou pour être utilisé dans l'exécution des procédés en question.

L'invention est définie par les revendications. Dans ce qui suit, lorsque le terme "mode de réalisation" se rapporte à une combinaison de caractéristiques non revendiquée, ledit terme doit être compris comme se référant à des exemples de la présente invention.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 présente un exemple d'un dispositif d'acquisition d'une séquence d'images multi-vues;
- les figures 2A et 2B illustrent un procédé de codage d'une séquence d'images multi-vues selon des modes particuliers de réalisation de l'invention,
- la figure 3 illustre des images d'une séquence multi-vues selon une vue centrale (k), une vue à droite (k+1) et une vue à gauche (k-1) de la vue centrale,
- les figures 4A et 4B illustrent plus en détail des modes particuliers de réalisation du procédé de codage selon l'invention,
- les figures 5A, 5B et 5C illustrent un flux de données codées représentatif d'une séquence vidéo multi-vues selon différents modes particuliers de réalisation de l'invention,
- les figures 6A et 6B illustrent un procédé de décodage d'une séquence d'images multi-vues selon des modes particuliers de réalisation de l'invention,
- les figures 7A, 7B et 7C illustrent plus en détail des modes particuliers de réalisation du procédé de décodage selon l'invention,
- la figure 8 présente la structure simplifiée d'un dispositif de codage d'une vidéo multi-vues,
- la figure 9 présente la structure simplifiée d'un dispositif de décodage d'un flux de données codées représentatif d'une vidéo multi-vues.

## 5. Description d'un mode de réalisation de l'invention

### 5.1 Principe général

Les procédés de codage et les procédés de décodage selon l'invention visent à offrir une fonctionnalité de navigation libre dans une vidéo multi-vues tout en minimisant la complexité de décodage de la séquence vidéo multi-vues. Une séquence vidéo multi-vues de N vues comprend N séquences d'images, chaque séquence d'images étant acquise simultanément par une caméra positionnée dans une scène, par exemple selon le dispositif illustré en figure 1.

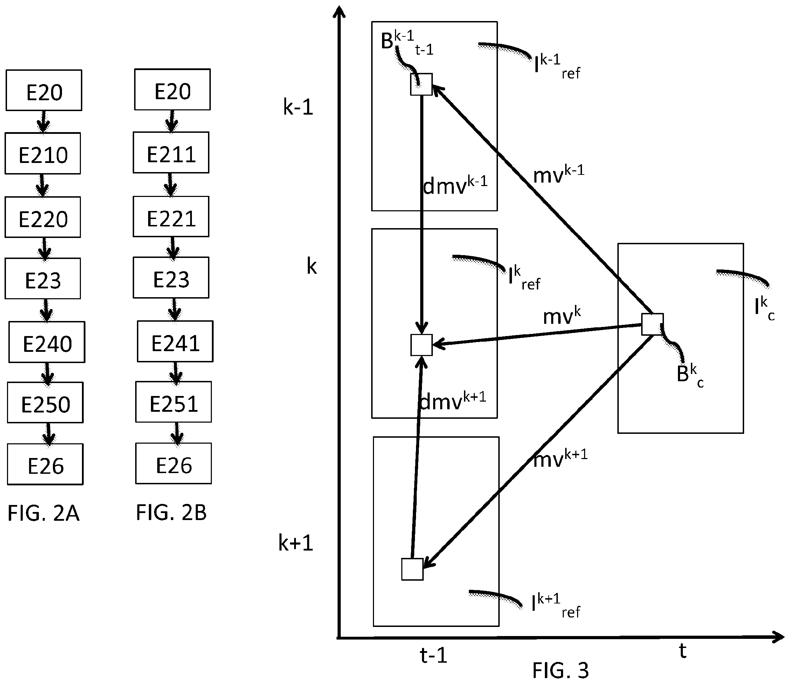

Afin d'offrir une fonctionnalité de navigation libre dans une vidéo multi-vues tout en limitant la complexité au décodage, chaque vue, autrement dit chaque séquence d'images, est codée de manière classique à l'aide de prédiction temporelle, i.e. inter-images. Des informations additionnelles sont codées dans le flux permettant de changer de vue lors de la restitution. Ces informations additionnelles permettent de reconstruire une image d'une vue de la vidéo de manière identique quelle que soit l'image de référence contenue dans le DPB (Decoded Picture Buffer en anglais) du décodeur. Ainsi, en référence à la figure 3, si l'image reconstruite à t-1 est une image d'une vue k-1 (notée $I^{k-1}_{ref}$ sur la figure 3) située à gauche d'une vue k demandée par l'utilisateur à l'instant t, l'image $I^k_c$ de la vue k reconstruite à l'instant t sera reconstruite à partir de l'image $I^{k-1}_{ref}$ reconstruite à t-1 de la vue courante k-1. L'image $I^k_c$ de la vue k reconstruite à l'instant t sera identique quelque soit l'image de référence comprise dans le DPB du décodeur: $I^{k-1}_{ref}$, $I^k_{ref}$, $I^{k+1}_{ref}$.

Ainsi, l'image $I^k_c$ de la vue k reconstruite à l'instant t à partir de l'image reconstruite à t-1 de la vue k-1 sera identique à l'image qui aurait été reconstruite si l'utilisateur n'avait pas changé de vue entre t-1 et t que l'image reconstruite à t-1 était l'image de la vue k, ou encore à l'image qui aurait été reconstruite si l'utilisateur avait changé de vue entre t-1 et t en venant de la vue située à droite (vue k+1) de la vue k.

Les procédés de codage et de décodage sont décrits ci-après dans le cas où l'image $I^k_c$ de la vue k peut être reconstruite par rapport à une image de référence quelconque parmi 3 vues k, k-1 et k+1. De tels procédés de codage et de décodage selon l'invention s'appliquent également au cas où le nombre d'images de référence est supérieur à 3, par exemple une image de référence d'une vue k+2, ou plus généralement, d'une vue j, j étant un entier compris entre 0 et N-1, N étant le nombre de vues de la séquence vidéo.

5. 2 Exemples de mise en oeuvre

Les procédés décrits ci-dessous permettent de coder et décoder une vue k et des informations additionnelles permettant au décodage de reconstruire une image de la vue k à partir d'une image précédemment reconstruite d'une vue k-1 à gauche de la vue k, et de reconstruire une image de la vue k à partir d'une image précédemment reconstruite d'une vue k+1 à droite de la vue k. Les procédés sont décrits dans le cas de 3 vues (k-1, k, k+1) situées de manière consécutive selon un ordre de parcours des vues correspondant par exemple à des positions spatiales successives des caméras ayant permis d'acquérir de telles vues. Les procédés s'appliquent de manière générale au cas de séquences d'images multi-vues ayant N vues, N étant un entier supérieur à 3.

La figure 2A illustre un procédé de codage d'une séquence d'images multi-vues selon un mode particulier de réalisation de l'invention. Un exemple d'un flux de données codées résultant d'un tel procédé de codage est illustré de manière simplifiée en figure 5A.

Chaque image d'une vue à coder est découpée en bloc de pixels et chaque bloc de pixels est ensuite codé de manière classique par prédiction spatiale ou temporelle en utilisant une image de référence précédemment reconstruite.

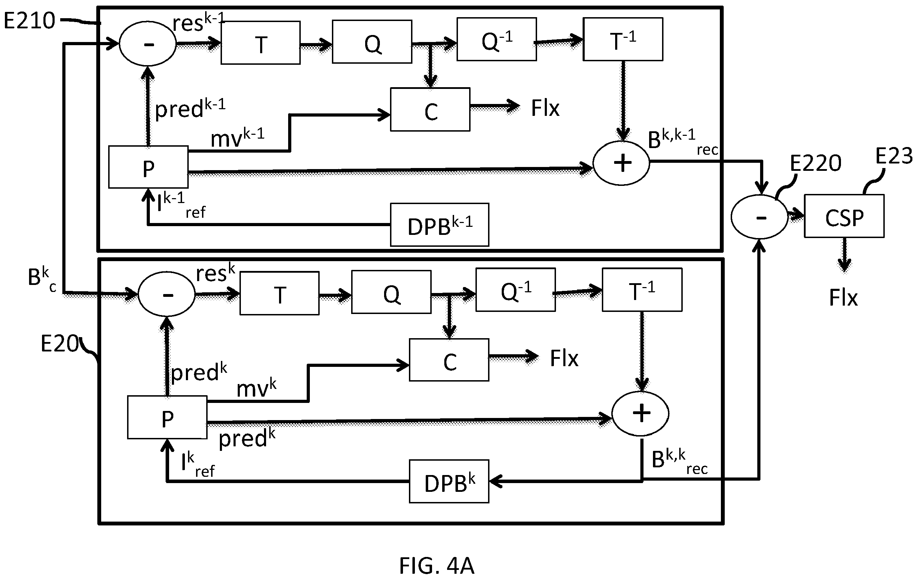

Lors d'une étape E20, un bloc $B^k_c$ (sur la figure 3) d'une image courante $I^k_c$ de la vue k, dit bloc courant $B^k_c$ est codé par référence à une image $I^k_{ref}$ précédemment codée-décodée de la vue k. L'étape E20 est décrite plus en détail à l'aide de la figure 4A.

Lors de l'étape E20, de manière classique, un bloc de prédiction $pred^k$ est construit afin de prédire le bloc courant $B^k_c$. Pour cela, un vecteur de mouvement $mv^k$ du bloc courant $B^k_c$ est estimé dans l'image de référence $I^k_{ref}$. L'image de référence $I^k_{ref}$ correspond à une image de la vue k précédemment codée spatialement ou temporellement par rapport à une image de référence de la vue k. L'image $I^k_{ref}$ est ensuite décodée, i.e. reconstruite, pour pouvoir être utilisée comme image de référence pour coder une image de la vue k ou d'une vue voisine k-1 ou k+1. Une telle image de référence est insérée dans une mémoire d'images de référence pour la vue k, notée $DPB^k$ sur la figure 4A.

Le vecteur de mouvement $mv^k$ est par exemple estimé de manière classique par une technique de "block-matching" (appariement de bloc en français) visant à déterminer le déplacement du bloc courant $B^k_c$ dans l'image de référence $I^k_{ref}$ sous contrainte d'un critère débit-distorsion.

Le vecteur de mouvement estimé $mv^k$ pour le bloc courant $B^k_c$ est ensuite codé par un module de codage entropique C et inséré dans le flux données codées Flx illustré en figure 5A.

Un résidu de prédiction $res^k$ est obtenu en calculant la différence entre le bloc courant $B^k_c$ et le bloc de prédiction $pred^k$. Ce résidu de prédiction est transformé par un module de transformation T mettant en oeuvre par exemple une transformation de type DCT (pour Discrète Cosine Transform). Les coefficients transformés du bloc de résidu sont ensuite quantifiés par un module de quantification Q, puis codés par le module de codage entropique C pour être insérés dans le flux de données codées Flx illustré en figure 5A. Le résidu de prédiction $res^k$ est reconstruit, en subissant une quantification inverse par le module $Q^{-1}$ et une transformation inverse par le module $T^{-1}$ et ajouté au bloc de prédiction $pred^k$ pour former le bloc courant reconstruit $B^{k,k}_{rec}$. Le bloc courant reconstruit $B^{k,k}_{rec}$ est ajouté dans le DPB de la vue k ($DPB^k$) afin de reconstruire l'image courante $I^k_c$ et que cette image puisse servir de référence lors du codage d'images suivantes.

Lors d'une étape E210, le bloc courant $B^k_c$ est codé par référence à une image $I^{k-1}_{ref}$ précédemment codée-décodée de la vue k-1. L'étape E210 est décrite plus en détail à l'aide de la figure 4A selon un mode particulier de réalisation de l'invention.

Selon un mode particulier de réalisation, lors de l'étape E210, de manière classique, un bloc de prédiction $pred^{k-1}$ est construit afin de prédire le bloc courant $B^k_c$ par rapport à la vue k-1. Pour cela, un vecteur de mouvement $mv^{k-1}$ du bloc courant $B^k_c$ est estimé dans l'image de référence $I^{k-1}_{ref}$. L'image de référence $I^{k-1}_{ref}$ correspond à une image de la vue k-1 précédemment codée spatialement ou temporellement par rapport à une autre image de référence de la vue k-1. L'image $I^{k-1}_{ref}$ est ensuite décodée, i.e. reconstruite, pour pouvoir être utilisée comme image de référence pour coder une image de la vue k-1 ou une image d'une vue voisine k ou k-2. Une telle image de référence est insérée dans une mémoire d'images de référence pour la vue k-1, notée $DPB^{k-1}$ sur la figure 4A.

Le vecteur de mouvement $mv^{k-1}$ est représentatif d'un déplacement du bloc courant $B^k_c$ dans l'image de référence $I^{k-1}_{ref}$. Un tel vecteur de mouvement est codé par le module de codage entropique C pour être inséré dans le flux de données Flx illustré en figure 5A.

Selon une première variante, le vecteur de mouvement $mv^{k-1}$ est estimé de manière indépendante de l'estimation du vecteur de mouvement $mv^k$ effectuée lors de l'étape E20 décrite ci-dessus.

Selon une autre variante, l'estimation du vecteur de mouvement $mv^{k-1}$ est effectuée conjointement à l'estimation du vecteur de mouvement $mv^k$. Selon cette variante, l'estimation conjointe des vecteurs de mouvement $mv^k$ et $mv^{k-1}$ est effectuée de sorte à déterminer les vecteurs $mv^k$ et $mv^{k-1}$ sous contrainte d'un critère débit-distorsion. Selon cette variante, pour chaque valeur du vecteur de mouvement $mv^k$ testée lors de l'estimation de mouvement effectuée au cours de l'étape E20, toutes les valeurs possibles du vecteur de mouvement $mv^{k-1}$ sont testées, et la valeur du vecteur de mouvement $mv^{k-1}$ offrant le meilleur compromis débit/distorsion est mémorisée avec la valeur testée de $mv^k$. Ainsi, à la fin de l'estimation de mouvement conjointe, un couple de vecteurs de mouvement $mv^k$, $mv^{k-1}$ est déterminé.

Un résidu de prédiction $res^{k-1}$ est obtenu en calculant la différence entre le bloc courant $B^k_c$ et le bloc de prédiction $pred^{k-1}$. Ce résidu de prédiction est transformé par le module de transformation T, puis les coefficients transformés de ce résidu sont quantifiés par le module de quantification Q, et codés par le module de codage entropique C pour être insérés dans le flux de données codées Flx illustré en figure 5A. Le résidu de prédiction $res^{k-1}$ est reconstruit, en subissant une quantification inverse par le module $Q^{-1}$ et une transformation inverse par le module $T^{-1}$ et ajouté au bloc de prédiction $pred^{k-1}$ pour former le bloc courant reconstruit $B^{k,k-1}_{rec}$.

Lors d'une étape E220, une information de différence $d^{k,k-1}$ calculée entre un bloc associé à la vue k et un bloc associé à la vue k-1 est obtenue à partir au moins du vecteur de mouvement $mv^k$ et du vecteur de mouvement $mv^{k-1}$ du bloc courant $B^k_c$. Selon le mode particulier décrit ici, l'information de différence $d^{k,k-1}$ est obtenue en calculant la différence entre les blocs reconstruits $B^{k,k}_{rec}$ et $B^{k,k-1}_{rec}$.

Lors d'une étape E23, une telle information $d^{k,k-1}$ est codée sans perte par un module de codage entropique CSP, par exemple selon un mode de codage dit "lossless" d'un codeur HEVC, et insérée dans le flux de données codées Flx illustré en figure 5A.

Lors d'une étape E240, le bloc courant $B^k_c$ est codé par référence à une image $I^{k+1}_{ref}$ précédemment codée-décodée de la vue k+1. L'étape E240 est similaire à l'étape E210 décrite ci-dessus dans laquelle l'indice k-1 est remplacé par l'indice k+1. L'étape E240 ne sera donc pas décrite plus en détail. A l'issue de l'étape E240, le vecteur de mouvement $mv^{k+1}$ représentatif du déplacement du bloc courant $B^k_c$ dans l'image de référence $I^{k+1}_{ref}$ de la vue k+1, ainsi que le résidu de prédiction $res^{k+1}$ sont insérés dans le flux de données codées illustré en figure 5A.

Lors d'une étape E250, une information de différence $d^{k,k+1}$ calculée entre un bloc associé à la vue k et un bloc associé à la vue k+1 est obtenue en calculant la différence entre les blocs reconstruits $B^{k,k}_{rec}$ et $B^{k,k+1}_{rec}$

Lors d'une étape E26, une telle information $d^{k,k+1}$ est codée sans perte et insérée dans le flux de données codées Flx illustré en figure 5A.

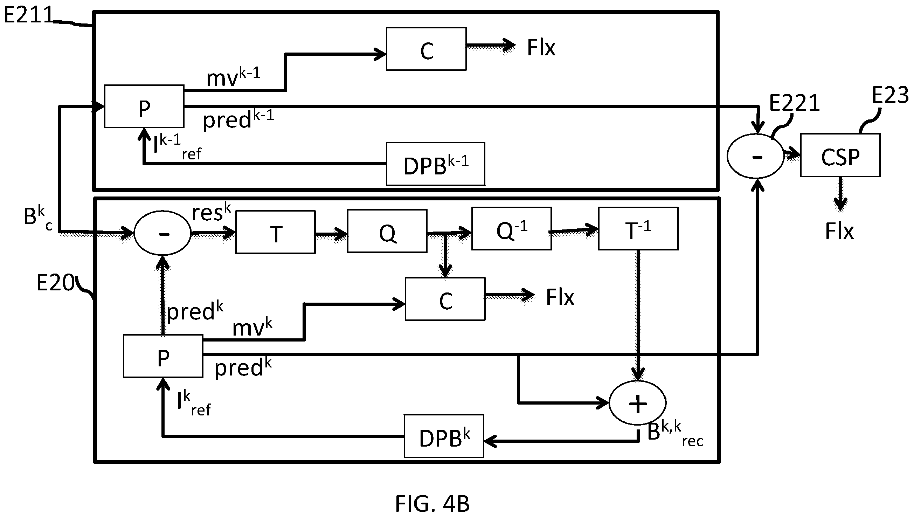

Les figures 2B et 4B illustrent un procédé de codage d'une séquence d'images multi-vues selon un autre mode particulier de réalisation de l'invention. Seules les différences par rapport au mode particulier de réalisation de l'invention décrit en relation avec les figures 2A et 4A sont décrites ici. Un exemple d'un flux de données codées résultant d'un tel procédé de codage est illustré de manière simplifiée en figure 5B.

Lors d'une étape E211, le bloc courant $B^k_c$ est codé par référence à une image $I^{k-1}_{ref}$ précédemment codée-décodée de la vue k-1. L'étape E211 est décrite plus en détail à l'aide de la figure 4B.

Selon ce mode particulier de réalisation de l'invention, lors de l'étape E211, de manière classique, le bloc de prédiction $pred^{k-1}$ est construit afin de prédire le bloc courant $B^k_c$ par rapport à la vue k-1. Pour cela, le vecteur de mouvement $mv^{k-1}$ du bloc courant $B^k_c$ est estimé par rapport à l'image de référence $I^{k-1}_{ref}$ comprise dans la mémoire d'images de référence pour la vue k-1. L'image de référence $I^{k-1}_{ref}$ correspond à une image de la vue k-1 précédemment codée spatialement ou temporellement par rapport à une autre image de référence de la vue k-1. L'image $I^{k-1}_{ref}$ est ensuite décodée, i.e. reconstruite, pour pouvoir être utilisée comme image de référence pour coder une image de la vue k-1 ou une image d'une vue voisine k ou k-2. Une telle image de référence est insérée dans une mémoire d'images de référence pour la vue k-1, notée $DPB^{k-1}$ sur la figure 4B.

Le vecteur de mouvement $mv^{k-1}$ est par exemple estimé de manière classique par une technique de "block-matching" visant à déterminer le déplacement du bloc courant $B^k_c$ dans l'image de référence $I^{k-1}_{ref}$ sous contrainte d'un critère débit-distorsion. Le vecteur de mouvement estimé $mv^{k-1}$ est représentatif d'un déplacement du bloc courant $B^k_c$ dans l'image de référence $I^{k-1}_{ref}$. Un tel vecteur de mouvement est ensuite codé dans le flux de données Flx par le module de codage entropique C.

De manière similaire au mode de réalisation décrit précédemment, le vecteur de mouvement $mv^{k-1}$ peut être estimé de manière indépendante au vecteur de mouvement $mv^k$ ou de manière conjointe.

Lors d'une étape E221, une information de différence $d^{k,k-1}$ calculée entre un bloc associé à la vue k et un bloc associé à la vue k-1 est obtenue à partir au moins du mouvement $mv^k$ et du mouvement $mv^{k-1}$ du bloc courant $B^k_c$. Selon le mode particulier décrit ici, l'information de différence $d^{k,k-1}$ est obtenue en calculant la différence entre les blocs de prédiction $pred^k$ et $pred^{k-1}$

Lors de l'étape E23, une telle information $d^{k,k-1}$ est codée sans perte par le module de codage entropique CSP, par exemple selon un mode de codage dit "lossless" d'un codeur HEVC.

Lors d'une étape E241, le bloc courant $B^k_c$ est codé par référence à une image $I^{k+1}_{ref}$ précédemment codée-décodée de la vue k+1. L'étape E241 est similaire à l'étape E211 décrite ci-dessus dans laquelle l'indice k-1 est remplacé par l'indice k+1. L'étape E241 ne sera donc pas décrite plus en détail. A l'issue de l'étape E241, le vecteur de mouvement $mv^{k+1}$ représentatif du déplacement du bloc courant $B^k_c$ dans l'image de référence $I^{k+1}_{ref}$ de la vue k+1 est inséré dans le flux de données codées illustré en figure 5B.

Lors d'une étape E251, une information de différence $d^{k,k+1}$ calculée entre un bloc associé à la vue k et un bloc associé à la vue k+1 est obtenue en calculant la différence entre les blocs de prédiction $pred^k$ et $pred^{k+1}$.

Lors de l'étape E26, une telle information $d^{k,k+1}$ est codée sans perte et insérée dans le flux de données codées Flx illustré en figure 5B.

Selon une variante de réalisation de ce mode particulier de réalisation de l'invention, lors des étapes E20, E211 et E241, les blocs de prédiction $pred^k$, $pred^{k-1}$ et $pred^{k+1}$ sont quantifiés avant le calcul des résidus de prédiction $res^k$, $res^{k-1}$ et $res^{k+1}$. Ainsi, la quantité d'information à coder lors du calcul de $d^{k,k-1}$ et $d^{k,k+1}$ est réduite.

Selon une autre variante de réalisation de ce mode particulier de réalisation de l'invention, lors des étapes E221 et E241, une fonction est appliquée aux blocs de prédiction $pred^k$, $pred^{k-1}$ lors du calcul de l'information $d^{k,k-1}$ représentative d'une différence entre la vue k et la vue k-1 et aux blocs de prédiction $pred^k$, $pred^{k+1}$ lors du calcul de l'information $d^{k,k+1}$ représentative d'une différence entre la vue k et la vue k+1. Par exemple, une telle fonction peut être de la forme: $d^{k,k-1} = pred^k - pred^{k-1} + offset$, où offset est une valeur d'un paramètre calculé à l'encodeur et transmise au décodeur. Un tel paramètre peut être calculé à l'encodeur de sorte à minimiser le coût de codage de $d^{k,k-1}$ par exemple en approchant le plus possible les valeurs du bloc $d^{k,k-1}$ de 0.

Selon un autre exemple, le paramètre offset peut être dépendant de la position du pixel dans le bloc. Le paramètre offset peut alors s'exprimer sous la forme $Offset(x,y) = a*x + b*y$, où $(x,y)$ sont les coordonnées d'un pixel du bloc $d^{k,k-1}$ et a et b sont des paramètres à transmettre au décodeur.

Selon cette variante de réalisation, le paramètre offset selon le premier exemple ou les paramètres a et b selon le deuxième exemple, sont codés dans le flux de données codées Flx, par exemple dans un entête de données de l'image $I^k_c$ ou dans un entête de la séquence d'images.

Selon un autre mode particulier de réalisation de l'invention, le vecteur de mouvement $mv^{k+1}$, respectivement $mv^{k-1}$, représentatif d'un déplacement du bloc courant $B^k_c$ dans une image de référence $I^{k+1}_{ref}$ d'une vue à gauche, respectivement $I^{k-1}_{ref}$ d'une vue à droite, de la vue courante k, est codé à l'aide d'un résidu de mouvement $dmv^{k+1}$, respectivement $dmv^{k-1}$, illustrés en figure 3. Les résidus de mouvement $dmv^{k+1}$ et $dmv^{k-1}$ sont obtenus par:

$$dmv^{k+1} = mv^{k+1} - mv^k$$

$$dmv^{k-1} = mv^{k-1} - mv^k.$$

Ainsi, selon ce mode particulier de réalisation, lors des étapes E210, E211, E240 et E241, au lieu de coder les vecteurs $mv^{k+1}$ et $mv^{k-1}$, les résidus de mouvements $dmv^{k+1}$ et $dmv^{k-1}$ sont codés dans le flux de données codées Flx, tel qu'illustré par la figure 5C.

Selon cet autre mode particulier de réalisation de l'invention, en variante, l'estimation du vecteur de mouvement $mv^{k-1}$, respectivement $mv^{k+1}$, au cours des étapes E210 ou E211, respectivement E240 ou E241, est effectuée de sorte à minimiser le coût de codage du résidu de mouvement $dmv^{k-1}$, respectivement $dmv^{k+1}$.

Selon une variante de réalisation de l'invention, l'information $d^{k,k-1}$ représentative d'une différence entre la vue k et la vue k-1 est obtenue par sélection en fonction d'un critère débit-distorsion entre un mode de codage dans lequel l'information $d^{k,k-1}$ est obtenue par une différence calculée entre le bloc courant de la vue k et un bloc co-localisé de la vue k-1 et un mode de codage dans lequel l'information $d^{k,k-1}$ est obtenue par une différence calculée entre un bloc de la vue k-1 co-localisé avec le bloc courant et le bloc courant de la vue k. Selon cette variante de réalisation de l'invention, dans le mode particulier de réalisation décrit en relation avec les figures 2A et 4A, l'information $d^{k,k-1}$ représentative d'une différence entre la vue k et la vue k-1 est calculée selon un premier mode de codage par $d^{k,k-1} = B^{k,k}_{rec} - B^{k,k-1}_{rec}$ et codée sans pertes, résultant en un coût de codage $R_1$.

Puis, l'information $d^{k,k-1}$ est calculée selon un deuxième mode de codage par $d^{k,k-1} = B^{k,k-1}_{rec} - B^{k,k}_{rec}$ et codée sans pertes, résultant en un coût de codage $R_2$.

Le mode de codage offrant le meilleur compromis débit-distorsion est sélectionné pour coder l'information $d^{k,k-1}$. Ici, le mode de codage sélectionné est le mode de codage offrant le coût de codage le plus bas.

Selon cette variante de réalisation de l'invention, dans le mode particulier de réalisation décrit en relation avec les figures 2B et 4B, l'information $d^{k,k-1}$ représentative d'une différence entre la vue k et la vue k-1 est calculée selon un premier mode de codage par $d^{k,k-1}=pred^k-pred^{k-1}$ et codée sans pertes, résultant en un coût de codage $R_1$.

Puis, l'information $d^{k,k-1}$ est calculée selon un deuxième mode de codage par $d^{k,k-1}= pred^{k-1}-pred^k$ et codée sans pertes, résultant en un coût de codage $R_2$.

Le mode de codage offrant le meilleur compromis débit-distorsion est sélectionné pour coder l'information $d^{k,k-1}$. Ici, le mode de codage sélectionné est le mode de codage offrant le coût de codage le plus bas.

Selon cette variante de réalisation, lors de l'étape E23 décrite en relation avec les figures 4A et 4B, une information représentative du mode de codage sélectionné est codée dans le flux de données codées Flx afin que le décodeur reconstruise correctement l'information $d^{k,k-1}$.

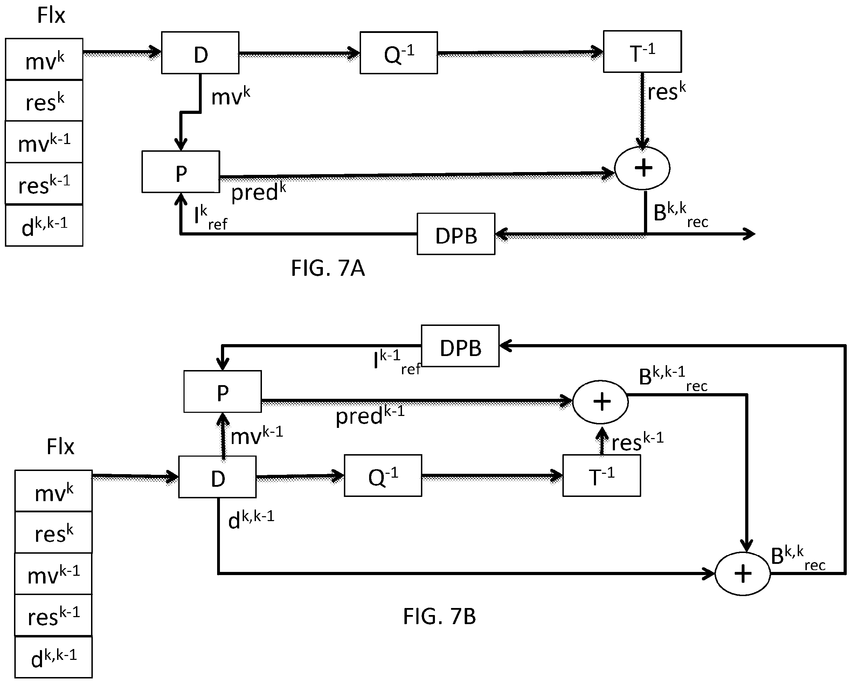

Le procédé de décodage selon l'invention est maintenant décrit en relation avec les figures 6A, 7A et 7B selon un mode particulier de réalisation de l'invention. Selon ce mode particulier de réalisation de l'invention, le procédé de décodage reconstruit une vidéo multi-vues en offrant une fonctionnalité de navigation libre à partir d'un flux de données codées selon le mode particulier de réalisation illustré à la figure 5A.

Le procédé de décodage décode le flux de données codées image par image, et reconstruit chaque image bloc par bloc. L'image reconstruite dépend de la vue demandée par l'utilisateur lors de la restitution. Par exemple, au début de la restitution de la vidéo multi-vues, l'utilisateur demande l'affichage d'une vue k. De manière classique, le décodeur décode les données codées correspondant à la vue k dans le flux de données codées Flx.

A un instant t, le DPB du décodeur comprend donc une image $I^k_{ref}$ reconstruite précédemment, par exemple à l'instant t-1, de la vue k.

On suppose ici que l'utilisateur ne change pas de vue entre les instants t-1 et t.

Pour chaque image codée par prédiction inter-images, et pour chaque bloc de l'image courante à reconstruire, il est vérifié lors d'une étape E60, si une image de référence de la vue k est présente dans le DPB du décodeur, i.e si une image de référence de la vue demandée est présente dans le DPB du décodeur. Si c'est le cas, lors d'une étape E61, les données codées du bloc courant sont décodées du flux Flx.

Plus précisément, et en relation avec la figure 7A, de manière connue, le résidu de prédiction $res^k$ et le vecteur de mouvement $mv^k$ sont décodés entropiquement par un module de décodage D. Le résidu de prédiction $res^k$ est déquantifié par le module de quantification inverse $Q^{-1}$ et subit une transformation inverse par le module de transformation $T^{-1}$.

Lors d'une étape E62, un bloc de prédiction $pred^k$ est construit par le module de prédiction P. Le bloc de prédiction $pred^k$ est obtenu par compensation en mouvement du bloc courant dans l'image de référence $I^k_{ref}$ à l'aide du vecteur de mouvement $mv^k$.

Lors d'une étape E63, le résidu de prédiction reconstruit $res^k$ est ajouté au bloc de prédiction $pred^k$ pour reconstruire le bloc courant $B^{k,k}_{rec}$ de la vue k. Le bloc courant reconstruit $B^{k,k}_{rec}$ est ajouté dans le DPB afin de reconstruire l'image courante $I^k_c$. L'image courante $I^k_c$ est ensuite utilisée comme image de référence lors du décodage d'images suivantes de la vue k ou de la vue k-1 ou k+1.

On suppose maintenant que l'utilisateur est en train de visualiser la vue k-1 de la séquence vidéo multi-vues et demande l'affichage de la vue k à l'instant t. Le procédé de décodage selon cet exemple est décrit en relation avec les figures 6A et 7B selon un mode particulier de réalisation de l'invention.

De manière classique, le décodeur décode les données codées correspondant à la vue k-1 dans le flux de données codées Flx. A un instant t, le DPB du décodeur comprend donc une image $I^{k-1}_{ref}$ reconstruite précédemment, à l'instant t-1, de la vue k-1. L'utilisateur change de vue entre les instants t-1 et t et demande l'affichage de la vue k à l'instant t.

Pour chaque image codée par prédiction inter-images, et pour chaque bloc de l'image courante à reconstruire $I^k_c$, il est vérifié lors de l'étape E60, si une image de référence de la vue k est présente dans le DPB du décodeur. Si c'est le cas, le procédé de décodage poursuit le décodage tel que décrit précédemment.

Dans l'exemple décrit ici, le DPB du décodeur ne comprend pas l'image de référence de la vue k. Lors d'une étape E64, une information de mouvement $mv^{k-1}$ associée au bloc courant représentative d'un déplacement dudit bloc courant dans l'image de référence précédemment reconstruite $I^{k-1}_{ref}$ est obtenue à partir du flux de données codées Flx. Plus précisément, le vecteur de mouvement $mv^{k-1}$ est décodé par le module de décodage entropique D.

Lors d'une étape E650, une information de résidu de prédiction est décodée du flux de données codées Flx. Plus précisément, les données codées du résidu de prédiction $res^{k-1}$ sont décodées par le module de décodage entropique D, déquantifiées par le module de quantification inverse $Q^{-1}$ et subissent une transformation inverse par le module de transformation $T^{-1}$ pour reconstruire le résidu de prédiction $res^{k-1}$.

Lors d'une étape E66, un bloc de prédiction $pred^{k-1}$ est construit par le module de prédiction P. Le bloc de prédiction $pred^{k-1}$ est obtenu par compensation en mouvement du bloc courant dans l'image de référence $I^{k-1}_{ref}$ à l'aide du vecteur de mouvement $mv^{k-1}$.

Lors d'une étape E67, une information $d^{k,k-1}$ représentative d'une différence entre la vue courante k-1 et la vue demandée k est décodée par le module de décodage entropique D.

Lors d'une étape E68, le résidu de prédiction reconstruit $res^{k-1}$ est ajouté au bloc de prédiction $pred^{k-1}$ pour reconstruire le bloc $B^{k-1,k-1}_{rec}$. Puis, l'information $d^{k,k-1}$ est ajoutée au bloc reconstruit $B^{k-1,k-1}_{rec}$ pour reconstruire le bloc courant $B^{k,k}_{rec}$. Le bloc courant reconstruit $B^{k,k}_{rec}$

est alors ajouté dans le DPB afin de reconstruire l'image courante $I^k_c$. L'image courante $I^k_c$ est ensuite utilisée comme image de référence lors du décodage d'images suivantes de la vue k ou de la vue k-1 ou k+1.

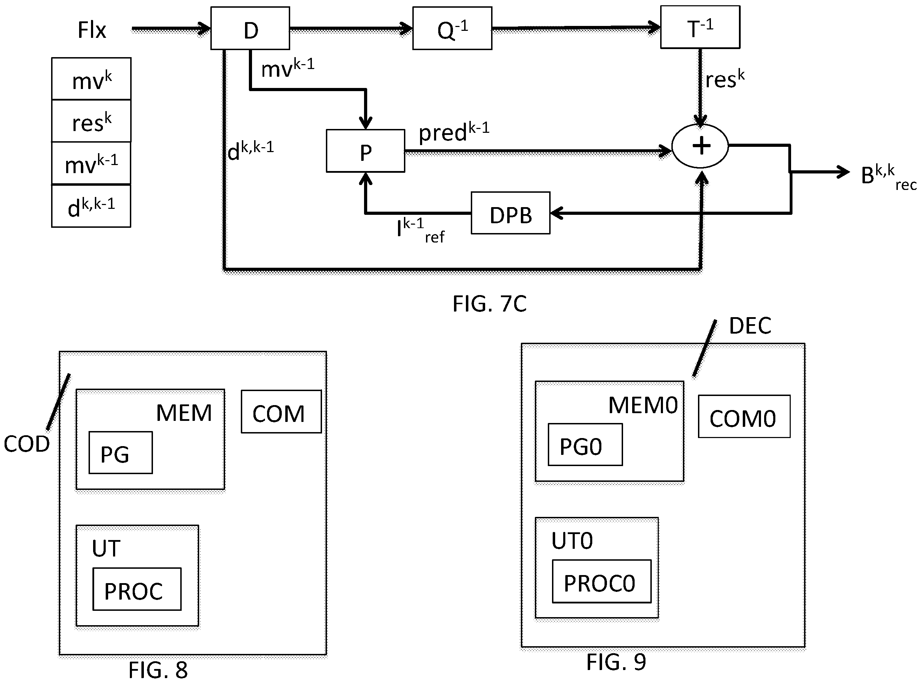

Le procédé de décodage est maintenant décrit en relation avec les figures 6B, 7A et 7C selon un autre mode particulier de réalisation de l'invention.

Selon ce mode particulier de réalisation de l'invention, le flux de données codées Flx est celui illustré en figure 5B. On suppose dans cet exemple que l'utilisateur est en train de visualiser la vue k-1 de la séquence vidéo multi-vues et demande l'affichage de la vue k à l'instant t.

De manière classique, le décodeur décode les données codées correspondant à la vue k-1 dans le flux de données codées Flx. A un instant t, le DPB du décodeur comprend donc une image $I^{k-1}_{ref}$ reconstruite à l'instant t-1, de la vue k-1. L'utilisateur change de vue entre les instants t-1 et t et demande l'affichage de la vue k à l'instant t.

Pour chaque image codée par prédiction inter-images, et pour chaque bloc de l'image courante à reconstruire $I^k_c$, il est vérifié lors de l'étape E60, si une image de référence de la vue k est présente dans le DPB du décodeur. Si c'est le cas, le procédé de décodage poursuit le décodage tel que décrit ci-dessus en relation avec les figures 6A et 7A.

Dans l'exemple décrit ici, le DPB du décodeur ne comprend pas l'image de référence de la vue k. Lors d'une étape E64, une information de mouvement $mv^{k-1}$ associée au bloc courant et représentative d'un déplacement du bloc courant dans l'image de référence précédemment reconstruite $I^{k-1}_{ref}$ est obtenue à partir du flux de données codées Flx. Plus précisément, le vecteur de mouvement $mv^{k-1}$ est décodé par le module de décodage entropique D.

Lors d'une étape E651, une information de résidu de prédiction est décodée du flux de données codées Flx. Plus précisément, les données codées du résidu de prédiction $res^k$ sont décodées par le module de décodage entropique D, déquantifiées par le module de quantification inverse $Q^{-1}$ et subissent une transformation inverse par le module de transformation $T^{-1}$ pour reconstruire le résidu de prédiction $res^k$. Selon ce mode particulier de réalisation de l'invention, le résidu de prédiction reconstruit $res^k$ correspond au même résidu de prédiction qui aurait été décodé si l'image de référence de la vue k avait été comprise dans le DPB. Autrement dit, ce résidu de prédiction $res^k$ est le résidu de prédiction calculé au codage comme la différence entre le bloc courant $B^k_c$ à coder et le bloc de prédiction $pred^k$ obtenu à partir de l'image $I^k_{ref}$ de référence de la vue k.

Lors d'une étape E66, le bloc de prédiction $pred^{k-1}$ est construit par le module de prédiction P. Le bloc de prédiction $pred^{k-1}$ est obtenu par compensation en mouvement du bloc courant dans l'image de référence $I^{k-1}_{ref}$ à l'aide du vecteur de mouvement $mv^{k-1}$.

Lors de l'étape E67, l'information $d^{k,k-1}$ représentative d'une différence entre la vue courante k-1 et la vue demandée k est décodée par le module de décodage entropique D.

Lors de l'étape E68, le résidu de prédiction reconstruit $res^{k-1}$ et l'information $d^{k,k-1}$ sont ajoutés au bloc de prédiction $pred^{k-1}$ pour reconstruire le bloc courant $B^{k,k}_{rec}$. Le bloc courant reconstruit $B^{k,k}_{rec}$ est alors ajouté dans le DPB afin de reconstruire l'image courante $I^k_c$. L'image courante $I^k_c$ est ensuite utilisée comme image de référence lors du décodage d'images suivantes de la vue k ou de la vue k-1 ou k+1.

Selon une variante de réalisation de ce mode particulier de réalisation de l'invention, au codage, les blocs de prédiction $pred^k$, $pred^{k-1}$ ont subi une quantification avant le calcul du résidu de prédiction $res^k$ et de l'information de différence $d^{k,k-1}$. Selon cette variante, au cours du décodage de la séquence multi-vues, lors des étapes E66 et E62, les blocs de prédiction $pred^k$, $pred^{k-1}$ subissent alors une quantification inverse, par exemple via le module de quantification inverse $Q^{-1}$.

Selon une autre variante de réalisation de ce mode particulier de réalisation de l'invention, au codage, une fonction a été appliquée aux blocs de prédiction $pred^k$, $pred^{k-1}$ lors du calcul de l'information $d^{k,k-1}$ représentative d'une différence entre la vue k et la vue k-1.

Selon un exemple de cette variante de réalisation, la fonction appliquée est de la forme $pred^k$-$pred^{k-1}$+offset. Au cours du décodage de la séquence multi-vues, le paramètre offset est décodé à partir du flux de données codées, par exemple dans un entête de données de l'image $I^k_c$ ou dans un entête de la séquence d'images. Lors de l'étape E67, le paramètre offset décodé est alors soustrait de l'information $d^{k,k-1}$ décodée.

Selon un autre exemple de cette variante de réalisation, la fonction appliquée est de la forme $d^{k,k-1}(x,y)$= $pred^k(x,y)$-$pred^{k-1}(x,y)$+ offset $(x,y)$, avec offset$(x,y)$=a*x+b*y, où $(x,y)$ correspond aux coordonnées d'un pixel du bloc $d^{k,k-1}$. Au cours du décodage de la séquence multi-vues, les paramètres a et b de la fonction offset$(x,y)$ sont décodés à partir du flux de données codées, par exemple dans un entête de données de l'image $I^k_c$ ou dans un entête de la séquence d'images. Lors de l'étape E67, le paramètre offset$(x,y)$=a*x+b*y est alors soustrait de l'information $d^{k,k-1}(x,y)$ décodée.

Selon un autre mode particulier de réalisation de l'invention, le vecteur de mouvement $mv^{k-1}$, représentatif d'un déplacement du bloc courant $B^k_c$ dans l'image de référence $I^{k-1}_{ref}$ de la vue k-1, est codé sous la forme d'un résidu de mouvement $dmv^{k-1}$, tel qu'illustré en figure 5C. Tel qu'illustré en figure 3, le résidu de mouvement $dmv^{k-1}$ est représentatif d'un déplacement d'un bloc de référence $B^{k-1}_{t-1}$ du bloc courant $B^k_c$ dans l'image de référence $I^k_{ref}$ de la vue k. Le bloc de référence $B^{k-1}_{t-1}$ cor-respond ici au bloc courant $B^k_c$ déplacé dans l'image de référence $I^{k-1}_{ref}$ de la vue k-1 par le vecteur de mouvement $mv^{k-1}$. Selon ce mode particulier de réalisation, lors de l'étape E64, le résidu de mouvement $dmv^{k-1}$ et le vecteur de mouvement $mv^k$ sont décodés par le module de décodage D. Le vecteur de mouvement $mv^k$ correspond au vecteur de mouvement calculé pour le bloc courant $B^k_c$ par rapport à l'image de référence $I^k_{ref}$ de la vue k et codé lors du codage du bloc courant $B^k_c$ par rapport à la vue k. Lors de l'étape E64, le vecteur de mouvement $mv^{k-1}$ est alors obtenu par: $mv^{k-1} = dmv^{k-1} + mv^k$.

Selon une variante de réalisation de l'invention, lors de l'étape E67 décrite en relation avec les figures 6A et 6B, une information représentative d'un mode de codage de l'information $d^{k,k-1}$ représentative d'une différence entre la vue k et la vue k-1 est décodée à partir du flux de données codées Flx.

Selon cette variante de réalisation de l'invention, et selon le mode particulier de réalisation décrit en relation avec les figures 6A et 7B, le mode de codage décodé permet de reconstruire le bloc courant selon un premier mode de codage de $d^{k,k-1}$ par $B^{k,k}_{rec} = B^{k,k-1}_{rec} + d^{k,k-1}$, ou selon un deuxième mode de codage de $d^{k,k-1}$, par $B^{k,k}_{rec} = B^{k,k-1}_{rec} - d^{k,k-1}$.

Selon cette variante de réalisation de l'invention, et selon le mode particulier de réalisation décrit en relation avec les figures 6B et 7C, le mode de codage décodé permet de reconstruire le bloc courant selon un premier mode de codage de $d^{k,k-1}$ par $B^{k,k}_{rec} = pred^{k-1} + d^{k,k-1} + res^k$, ou selon un deuxième mode de codage de $d^{k,k-1}$, par $B^{k,k}_{rec} = pred^{k-1} - d^{k,k-1} + res^k$.

Le procédé de décodage a été décrit ci-dessus dans le cas d'un changement d'une vue courante k-1 vers une vue demandée k. Les modes particuliers de réalisation de l'invention pour décoder une séquence vidéo multi-vues lors d'un changement d'une vue courante k+1 vers la vue demandée k sont similaires.

Le procédé de décodage décrit ci-dessus suppose que le décodeur dispose des données codées de la séquence vidéo multi-vues pour toutes les vues de la séquence, et des données additionnelles permettant de changer de vue à partir d'une vue k quelconque vers une vue k-1 suivante à gauche, ou vers une vue k+1 suivante à droite.

Le procédé de décodage s'applique également au cas où seules les données codées du flux nécessaires à l'affichage de la vue demandée sont transmises au décodeur. En d'autres termes, le décodeur peut communiquer avec un serveur pour obtenir les données codées de la vue courante, et si besoin des données additionnelles de changement de vue lorsque l'utilisateur demande un tel changement de vue.

La figure 8 présente la structure simplifiée d'un dispositif de codage COD adapté pour mettre en oeuvre le procédé de codage selon l'un quelconque des modes particuliers de réalisation de l'invention décrit précédemment.

Un tel dispositif de codage comprend une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en oeuvre les étapes du procédé de codage tel que décrit précédemment, lorsque le programme est exécuté par le processeur PROC.

A l'initialisation, les instructions de code du programme d'ordinateur PG sont par exemple chargées dans une mémoire RAM (non représentée) avant d'être exécutées par le processeur PROC. Le processeur PROC de l'unité de traitement UT met notamment en oeuvre les étapes du procédé de codage décrit en relation avec les figures 2A, 2B et 4A-B, selon les instructions du programme d'ordinateur PG.

Selon un mode particulier de réalisation de l'invention, le dispositif de codage comprend une interface de communication COM permettant notamment au dispositif de codage de transmettre un flux de données codées représentatif d'une séquence vidéo multi-vues, via un réseau de communication.

Selon un mode particulier de réalisation de l'invention, le dispositif de codage décrit précédemment est compris dans un terminal.

La figure 9 présente la structure simplifiée d'un dispositif de décodage DEC adapté pour mettre en oeuvre le procédé de décodage selon l'un quelconque des modes particuliers de réalisation de l'invention décrit précédemment.

Un tel dispositif de décodage comprend une mémoire MEM0, une unité de traitement UT0, équipée par exemple d'un processeur PROC0, et pilotée par le programme d'ordinateur PG0 stocké en mémoire MEM0. Le programme d'ordinateur PG0 comprend des instructions pour mettre en oeuvre les étapes du procédé de décodage tel que décrit précédemment, lorsque le programme est exécuté par le processeur PROC0.

Selon un mode particulier de réalisation de l'invention, le dispositif de décodage DEC comprend une interface de communication COM0 permettant notamment au dispositif de décodage de recevoir un flux de données codées représentatif d'une séquence vidéo multi-vues, via un réseau de communication.

A l'initialisation, les instructions de code du programme d'ordinateur PG0 sont par exemple chargées dans une mémoire RAM (non représentée) avant d'être exécutées par le processeur PROC0. Le processeur PROC0 de l'unité de traitement UT0 met notamment en oeuvre les étapes du procédé de décodage décrit en relation avec les figures 6A, 6B et 7A-C, selon les instructions du programme d'ordinateur PG0. La mémoire MEM0 est adaptée pour stocker au moins une image de référence reconstruite d'une vue précédemment décodée et au moins une image d'une autre vue reconstruite à partir de l'image de référence reconstruite de la vue précédemment décodée, l'autre vue étant différente de la vue précédemment décodée.

Selon un mode particulier de réalisation de l'invention, le dispositif de décodage décrit précédemment est compris dans un terminal.

**Revendications**

1. Procédé de décodage d'un flux de données codées représentatif d'une vidéo comprenant au moins une première vue (k) et une deuxième vue (k-1) différente de la première vue (k), mis en oeuvre par un dispositif de décodage, ledit dispositif de décodage comprenant une mémoire comprenant au moins une image ($I^{k-1}_{ref}$) de référence précédemment reconstruite de la deuxième vue (k-1) à un instant antérieur à un instant courant de décodage, le procédé de décodage comprenant, pour au moins un bloc d'une image courante de la première vue (k), dit bloc courant:

   - obtention (E64), à partir au moins du flux de données codées, d'une information de mouvement ($mv^{k-1}$) associée audit bloc courant, ladite information de mouvement étant représentative d'un déplacement dudit bloc courant dans ladite image de référence précédemment reconstruite de la deuxième vue (k-1),
   - décodage (E650, E651), à partir du flux de données codées, d'une information d'un résidu de prédiction ($res^k$) correspondant à une différence entre le bloc courant et un bloc de prédiction ($pred^k$) dudit bloc courant, situé dans une image ($I^k_{ref}$) de référence de la première vue, ledit bloc de prédiction ($pred^k$) étant obtenu à partir d'une information de mouvement ($mv^k$) représentative d'un déplacement dudit bloc courant dans ladite image ($I^k_{ref}$) de référence de la première vue et d'une information d'un résidu de prédiction ($res^{k-1}$) correspondant à une différence entre le bloc courant et un bloc de prédiction ($pred^{k-1}$) dudit bloc courant, situé dans ladite image ($I^{k-1}_{ref}$) de référence de la deuxième vue (k-1), ledit bloc de prédiction ($pred^{k-1}$) étant obtenu à partir de ladite information de mouvement ($mv^{k-1}$),
   - décodage (E67), à partir du flux de données codées, d'une information de différence ($d^{k,k-1}$) correspondant à une différence qui a été calculée lors du codage du bloc courant, entre

      a) un premier bloc courant reconstruit ($B^{k,k}_{rec}$) qui a été obtenu à partir de ladite image ($I^k_{ref}$) de référence de la première vue (k) et à partir de ladite information de mouvement ($mv^k$) représentative d'un déplacement dudit bloc courant dans ladite image ($I^k_{ref}$) de référence de la première vue (k) et
      b) un deuxième bloc courant reconstruit ($B^{k,k-1}_{rec}$) qui a été obtenu à partir d'une image ($I^{k-1}_{ref}$) de référence de la deuxième vue (k-1) et à partir de ladite information de mouvement ($mv^{k-1}$) représentative d'un déplacement dudit bloc courant dans ladite image ($I^{k-1}_{ref}$) de référence de la deuxième vue (k-1),

   - obtention (E66) du bloc de prédiction ($pred^{k-1}$) de l'image ($I^{k-1}_{ref}$) de référence de la deuxième vue (k-1) à partir de ladite image de référence de ladite deuxième vue (k-1) et de ladite information de mouvement obtenue ($mv^{k-1}$),
   - reconstruction (E68) dudit bloc courant à partir du bloc de prédiction ($pred^{k-1}$), desdites informations de résidu de prédiction décodée ($res^{k-1}$, $res^k$) et de ladite information de différence décodée ($d^{k,k-1}$).

2. Procédé de décodage d'un flux de données codées représentatif d'une vidéo comprenant au moins une première vue (k) et une deuxième vue (k-1) différente de la première vue (k), mis en oeuvre par un dispositif de décodage, ledit dispositif de décodage comprenant une mémoire comprenant au moins une image ($I^{k-1}_{ref}$) de référence précédemment reconstruite de la deuxième vue (k-1) à un instant antérieur à un instant courant de décodage, le procédé de décodage comprenant, pour au moins un bloc d'une image courante de la première vue (k), dit bloc courant:

   - obtention (E64), à partir au moins du flux de données codées, d'une information de mouvement ($mv^{k-1}$) associée audit bloc courant, ladite information de mouvement étant représentative d'un déplacement dudit bloc courant dans ladite image de référence précédemment reconstruite de la deuxième vue (k-1),
   - décodage (E650, E651), à partir du flux de données codées, d'une information d'un résidu de prédiction ($res^k$) correspondant à une différence entre le bloc courant et un bloc de prédiction ($pred^k$) dudit bloc courant, situé dans une image ($I^k_{ref}$) de référence de la première vue (k), ledit bloc de prédiction ($pred^k$) étant obtenu à partir d'une information de mouvement ($mv^k$) représentative d'un déplacement dudit bloc courant dans ladite image ($I^k_{ref}$) de référence de la première vue (k),
   - décodage (E67), à partir du flux de données codées, d'une information de différence ($d^{k,k-1}$) correspondant à une différence qui a été calculée lors du codage du bloc courant, entre

      a) ledit bloc de prédiction ($pred^k$) de ladite image ($I^k_{ref}$) de référence de la première vue (k) et
      b) un bloc de prédiction ($pred^{k-1}$) de ladite image ($I^{k-1}_{ref}$) de référence de la deuxième vue (k-1) obtenu à partir de ladite information de mouvement ($mv^{k-1}$) représentative d'un déplacement dudit bloc courant dans ladite image ($I^{k-1}_{ref}$) de référence de la deuxième vue (k-1),

- obtention (E66) du bloc de prédiction ($pred^{k-1}$) de l'image ($I^{k-1}_{ref}$) de référence de la deuxième vue (k-1) à partir de ladite image de référence de ladite deuxième vue (k-1) et de ladite information de mouvement obtenue ($mv^{k-1}$),

- reconstruction (E68) dudit bloc courant à partir du bloc de prédiction ($pred^{k-1}$), de ladite information de résidu de prédiction décodée ($res^k$) et de ladite information de différence décodée ($d^{k,k-1}$).

3. Procédé de décodage selon la revendication 2, dans lequel le bloc de prédiction ($pred^k$) de ladite image ($I^k_{ref}$) de référence de la première vue (k) et le bloc de prédiction ($pred^{k-1}$) de ladite image ($I^{k-1}_{ref}$) de référence de la deuxième vue (k-1) sont soumis à une quantification inverse d'une quantification appliquée au bloc courant durant le codage du bloc courant.

4. Procédé de décodage selon la revendication 2, dans lequel un paramètre est soustrait de l'information de différence ($d^{k,k-1}$) décodée.

5. Procédé de décodage selon la revendication 4, comprenant en outre le décodage d'une information représentative dudit paramètre.

6. Procédé de décodage selon l'une quelconque des revendications 1 à 5, dans lequel la première vue est une vue précédente ou suivante de la deuxième vue selon une position prédéterminée des vues dans la vidéo.

7. Procédé de décodage selon l'une quelconque des revendications 1 à 6, dans lequel l'obtention de ladite information de mouvement associée audit bloc courant comprend:

- le décodage d'une première information de mouvement ($dmv^{k-1}$) représentative d'un déplacement dans l'image ($I^{k-1}_{ref}$) de référence précédemment reconstruite de la deuxième vue (k-1) d'un bloc de référence ($B^{k-1}_{t-1}$) dudit bloc courant ($B^k_c$), ledit bloc de référence ($B^{k-1}_{t-1}$) correspondant audit bloc courant ($B^k_c$) déplacé dans une image ($I^k_{ref}$) de référence de la première vue (k),

- le décodage d'une deuxième information de mouvement ($mv^k$) représentative d'un déplacement dudit bloc courant ($B^k_c$) dans ladite image ($I^k_{ref}$) de référence de la première vue (k),

- l'ajout de la première et de la deuxième information de mouvement.

8. Dispositif de décodage d'un flux de données codées (Flx) représentatif d'une vidéo comprenant au moins une première vue (k) et une deuxième vue (k-1) différente de la première vue, ledit dispositif de décodage comprenant une mémoire (MEMO) comprenant au moins une image ($I^{k-1}_{ref}$) de référence précédemment reconstruite de la deuxième vue (k-1) à un instant antérieur à un instant courant de décodage, ledit dispositif de décodage étant configuré pour, pour au moins un bloc d'une image courante de la première vue (k), dit bloc courant:

- obtenir, à partir au moins du flux de données codées, une information de mouvement ($mv^{k-1}$) associée audit bloc courant, ladite information de mouvement étant représentative d'un déplacement dudit bloc courant dans ladite image de référence précédemment reconstruite de la deuxième vue (k-1),

- décoder, à partir du flux de données codées, une information d'un résidu de prédiction ($res^k$) correspondant à une différence entre le bloc courant et un bloc de prédiction ($pred^k$) dudit bloc courant, situé dans une image ($I^k_{ref}$) de référence de la première vue, ledit bloc de prédiction ($pred^k$) étant obtenu à partir d'une information de mouvement ($mv^k$) représentative d'un déplacement dudit bloc courant dans ladite image ($I^k_{ref}$) de référence de la première vue (k) et une information d'un résidu de prédiction ($res^{k-1}$) correspondant à une différence entre le bloc courant et un bloc de prédiction ($pred^{k-1}$) dudit bloc courant, situé dans ladite image ($I^{k-1}_{ref}$) de référence de la deuxième vue (k-1), ledit bloc de prédiction ($pred^{k-1}$) étant obtenu à partir de ladite information de mouvement ($mv^{k-1}$),

- décoder, à partir du flux de données codées, une information de différence ($d^{k,k-1}$) correspondant à une différence qui a été calculée lors du codage du bloc courant, entre

a) un premier bloc courant reconstruit ($B^{k,k}_{rec}$) qui a été obtenu à partir de ladite image ($I^k_{ref}$) de référence de la première vue (k) et à partir de ladite information de mouvement ($mv^k$) représentative d'un déplacement dudit bloc courant dans ladite image ($I^k_{ref}$) de référence de la première vue (k) et

b) un deuxième bloc courant reconstruit ($B^{k,k-1}_{rec}$) qui a été obtenu à partir de ladite image ($I^{k-1}_{ref}$) de référence de la deuxième vue (k-1) et à partir de ladite information de mouvement ($mv^{k-1}$) représentative d'un déplacement dudit bloc courant dans ladite image ($I^{k-1}_{ref}$) de référence de la deuxième vue (k-1),

- obtenir le bloc de prédiction ($pred^{k-1}$) de l'image de référence ($I^{k-1}_{ref}$) de la deuxième vue (k-1) à partir de l'image de référence de ladite deuxième vue et de ladite information de mouvement obtenue ($mv^{k-1}$),

- reconstruire ledit bloc courant à partir du bloc de prédiction (pred$^{k-1}$), desdites informations de résidu de prédiction décodées (res$^{k-1}$, res$^k$) et de ladite information de différence décodée (d$^{k,k-1}$).

9. Dispositif de décodage d'un flux de données codées (Flx) représentatif d'une vidéo comprenant au moins une première vue (k) et une deuxième vue (k-1) différente de la première vue, ledit dispositif de décodage comprenant une mémoire (MEMO) comprenant au moins une image (I$^{k-1}_{ref}$) de référence précédemment reconstruite de la deuxième vue (k-1) à un instant antérieur à un instant courant de décodage, ledit dispositif de décodage étant configuré pour, pour au moins un bloc d'une image courante de la première vue (k), dit bloc courant:

   - obtenir, à partir au moins du flux de données codées, une information de mouvement (mv$^{k-1}$) associée audit bloc courant, ladite information de mouvement étant représentative d'un déplacement dudit bloc courant dans ladite image de référence précédemment reconstruite de la deuxième vue (k-1),

   - décoder, à partir du flux de données codées, une information d'un résidu de prédiction (res$^k$) correspondant à une différence entre le bloc courant et un bloc de prédiction (pred$^k$) dudit bloc courant, situé dans une image (I$^k_{ref}$) de référence de la première vue (k), ledit bloc de prédiction (pred$^k$) étant obtenu à partir d'une information de mouvement (mv$^k$) représentative d'un déplacement dudit bloc courant dans ladite image (I$^k_{ref}$) de référence de la première vue (k),

   - décoder, à partir du flux de données codées, une information de différence (d$^{k,k-1}$) correspondant à une différence qui a été calculée lors du codage du bloc courant, entre

      a) ledit bloc de prédiction (pred$^k$) de l'image (I$^k_{ref}$) de référence de la première vue (k) et
      b) un bloc de prédiction (pred$^{k-1}$) de ladite image (I$^{k-1}_{ref}$) de référence de la deuxième vue (k-1) obtenu à partir de ladite information de mouvement (mv$^{k-1}$) représentative d'un déplacement dudit bloc courant dans ladite image (I$^{k-1}_{ref}$) de référence de la deuxième vue (k-1),

   - obtenir le bloc de prédiction (pred$^{k-1}$) de l'image (I$^{k-1}_{ref}$) de référence de la deuxième vue (k-1) à partir de ladite image de référence de ladite deuxième vue (k-1) et de ladite information de mouvement obtenue (mv$^{k-1}$),

   - reconstruire le bloc courant à partir du bloc de prédiction (pred$^{k-1}$), de ladite information de résidu de prédiction décodée (res$^k$) et de ladite information de différence décodée (d$^{k,k-1}$).

10. Procédé de codage d'une vidéo comprenant au moins une première vue (k) et une deuxième vue (k-1) différente de la première vue (k), le procédé de codage comprenant, pour au moins un bloc d'une image courante de ladite première vue (k), dit bloc courant:

   - codage (E20) dudit bloc courant par référence à une image (I$^k_{ref}$) précédemment codée-décodée de la première vue (k) à un instant antérieur à un instant courant de codage, au cours duquel sont estimées une première information de mouvement (mv$^k$) représentative d'un déplacement dudit bloc courant dans l'image (I$^k_{ref}$) précédemment codée-décodée de la première vue (k) et une information de résidu de prédiction (res$^k$) correspondant à une différence entre le bloc courant et un bloc de prédiction (pred$^k$) dudit bloc courant, situé dans une image (I$^k_{ref}$) de référence de la première vue (k), ledit bloc de prédiction (pred$^k$) étant obtenu à partir de ladite première information de mouvement (mv$^k$),

   - codage (E210, E240) dudit bloc courant par référence à une image (I$^{k-1}_{ref}$) précédemment codée-décodée de la deuxième vue (k-1), au cours duquel est estimée au moins une deuxième information de mouvement (mv$^{k-1}$) représentative d'un déplacement dudit bloc courant dans ladite image (I$^{k-1}_{ref}$) précédemment codée-décodée de la deuxième vue (k-1) et une information d'un résidu de prédiction (res$^{k-1}$) correspondant à une différence entre le bloc courant et un bloc de prédiction (pred$^{k-1}$) dudit bloc courant situé dans ladite image (I$^{k-1}_{ref}$) de référence de la deuxième vue (k-1), ledit bloc de prédiction (pred$^{k-1}$) étant obtenu à partir de ladite information de mouvement (mv$^{k-1}$),

   - obtention (E220, E250) d'une information de différence (d$^{k,k-1}$) correspondant à une différence calculée entre

      a) un premier bloc courant reconstruit (B$^{k,k}_{rec}$) qui a été obtenu à partir de ladite image (I$^k_{ref}$) de référence de la première vue (k) et à partir de ladite première information de mouvement (mv$^k$) et
      b) un deuxième bloc courant reconstruit (B$^{k,k-1}_{rec}$) qui a été obtenu à partir de ladite image (I$^{k-1}_{ref}$) de référence de la deuxième vue (k-1) et à partir de ladite deuxième information de mouvement (mv$^{k-1}$),

   - codage (E23, E26) sans perte de ladite information de différence calculée (d$^{k,k-1}$),
   - codage de ladite deuxième information de mouvement (mv$^{k-1}$) et desdites informations de résidu de prédiction ($res^{k-1}$, $res^k$).

**11.** Procédé de codage selon la revendication 10, dans lequel ladite information de différence calculée entre ledit premier bloc reconstruit et ledit deuxième bloc courant reconstruit est obtenue par la sélection d'un mode parmi les modes suivants, en fonction d'un critère débit-distorsion :

- codage d'un signal représentatif du résultat de la soustraction dudit deuxième bloc courant reconstruit ($B^{k,k-1}_{rec}$) dudit premier bloc courant reconstruit ($B^{k,k}_{rec}$),
- codage d'un signal représentatif du résultat de la soustraction dudit premier bloc courant reconstruit ($B^{k,k}_{rec}$) dudit deuxième bloc courant reconstruit ($B^{k,k-1}_{rec}$),

ledit procédé de codage comprenant le codage d'une information représentative du mode sélectionné.

**12.** Procédé de codage d'une vidéo comprenant au moins une première vue (k) et une deuxième vue (k-1) différente de la première vue, le procédé de codage comprenant, pour au moins un bloc d'une image courante de ladite première vue (k), dit bloc courant :

- codage (E20) dudit bloc courant par référence à une image ($I^k_{ref}$) précédemment codée-décodée de la première vue (k) à un instant antérieur à un instant courant de codage, au cours duquel sont estimées une première information de mouvement ($mv^k$) représentative d'un déplacement dudit bloc courant dans l'image ($I^k_{ref}$) précédemment codée-décodée de la première vue (k) et une information de résidu de prédiction ($res^k$) correspondant à une différence entre le bloc courant et un bloc de prédiction ($pred^k$) dudit bloc courant, situé dans une image ($I^k_{ref}$) de référence de la première vue (k), ledit bloc de prédiction ($pred^k$) étant obtenu à partir d'une information de mouvement ($mv^k$) représentative d'un déplacement dudit bloc courant dans ladite image ($I^k_{ref}$) de référence de la première vue (k),
- codage (E211, E241) dudit bloc courant par référence à une image ($I^{k-1}_{ref}$) précédemment codée-décodée de la deuxième vue (k-1), au cours duquel est estimée au moins une deuxième information de mouvement ($mv^{k-1}$) représentative d'un déplacement dudit bloc courant dans l'image ($I^{k-1}_{ref}$) précédemment codée-décodée de la deuxième vue (k-1),
- obtention (E221, E251) d'une information de différence ($d^{k,k-1}$) correspondant à une différence calculée entre

a) ledit bloc de prédiction ($pred^k$) de ladite image ($I^k_{ref}$) de référence de la première vue (k) et
b) un bloc de prédiction ($pred^{k-1}$) de ladite image ($I^{k-1}_{ref}$) de référence de la deuxième vue (k-1) obtenu à partir de ladite information de mouvement ($mv^{k-1}$) représentative d'un déplacement dudit bloc courant dans ladite image ($I^{k-1}_{ref}$) de référence de la deuxième vue (k-1),

- codage (E23, E26) sans perte de ladite information de différence calculée ($d^{k,k-1}$),
- codage de ladite deuxième information de mouvement ($mv^{k-1}$) et de ladite information de résidu de prédiction ($res^k$).

**13.** Procédé de codage selon la revendication 12, dans lequel ladite information de différence calculée entre ledit bloc de prédiction ($pred^k$) de l'image ($I^k_{ref}$) de référence de la première vue (k) et ledit bloc de prédiction ($pred^{k-1}$) de l'image ($I^{k-1}_{ref}$) de référence de la deuxième vue (k-1) est obtenue par la sélection d'un mode parmi les modes suivants, en fonction d'un critère débit-distorsion:

- codage d'un signal représentatif du résultat de la soustraction dudit bloc de prédiction ($pred^{k-1}$) de ladite image ($I^{k-1}_{ref}$) de référence de la deuxième vue (k-1) dudit bloc de prédiction ($pred^k$) de l'image ($I^k_{ref}$) de référence de la première vue (k),
- codage d'un signal représentatif du résultat de la soustraction dudit bloc de prédiction ($pred^k$) de l'image ($I^k_{ref}$) de référence de la première vue (k) dudit bloc de prédiction ($pred^{k-1}$) de ladite image ($I^{k-1}_{ref}$) de référence de la deuxième vue (k-1),

ledit procédé de codage comprenant le codage d'une information représentative du mode sélectionné.

**14.** Dispositif de codage d'une vidéo comprenant au moins une première vue (k) et une deuxième vue (k-1) différente de la première vue, le dispositif de codage étant configuré pour, pour au moins un bloc d'une image courante de ladite première vue (k), dit bloc courant:

- coder ledit bloc courant par référence à une image ($I^k_{ref}$) précédemment codée-décodée de la première vue (k) à un instant antérieur à un instant courant de codage, une première information de mouvement ($mv^k$) représentative d'un déplacement dudit bloc courant dans l'image ($I^k_{ref}$) précédemment codée-décodée de la première vue (k) et une information de résidu de prédiction ($res^k$) correspondant à une différence entre le bloc courant et un bloc de prédiction ($pred^k$) dudit bloc courant, situé dans une image ($I^k_{ref}$) de référence de la première vue (k) étant estimées, ledit bloc de prédiction ($pred^k$) étant obtenu à partir de ladite première information de mouvement ($mv^k$),

- coder ledit bloc courant par référence à une image ($I^{k-1}_{ref}$) précédemment codée-décodée de la deuxième vue (k-1), au moins une deuxième information de mouvement ($mv^{k-1}$) représentative d'un déplacement dudit bloc courant dans ladite image ($I^{k-1}_{ref}$) précédemment codée-décodée de la deuxième vue (k-1) et une information de résidu de prédiction ($res^{k-1}$) correspondant à une différence entre le bloc courant et un bloc de prédiction ($pred^{k-1}$) dudit bloc courant situé dans ladite image de référence ($I^{k-1}_{ref}$) de la deuxième vue (k-1) étant estimées, ledit bloc de prédiction ($pred^{k-1}$) étant obtenu à partir de ladite deuxième information de mouvement ($mv^{k-1}$),

- obtenir une information de différence ($d^{k,k-1}$) correspondant à une différence calculée entre

a) un premier bloc courant reconstruit ($B^{k,k}_{rec}$) qui a été obtenu à partir de ladite image ($I^k_{ref}$) de référence de la première vue (k) et à partir de ladite première information de mouvement ($mv^k$) et

b) un deuxième bloc courant reconstruit ($B^{k,k-1}_{rec}$) qui a été obtenu à partir de ladite image ($I^{k-1}_{ref}$) de référence de la deuxième vue (k-1) et à partir de ladite deuxième information de mouvement ($mv^{k-1}$),

- coder sans perte de ladite information de différence calculée ($d^{k,k-1}$),

- coder ladite deuxième information de mouvement ($mv^{k-1}$) et lesdites informations de résidu de prédiction ($res^{k-1}$, $res^k$).

**15.** Dispositif de codage d'une vidéo comprenant au moins une première vue (k) et une deuxième vue (k-1) différente de la première vue, le dispositif de codage étant configuré pour, pour au moins un bloc d'une image courante de ladite première vue (k), dit bloc courant:

- coder ledit bloc courant par référence à une image ($I^k_{ref}$) précédemment codée-décodée de la première vue (k) à un instant antérieur à un instant courant de codage, au cours duquel sont estimées une première information de mouvement ($mv^k$) représentative d'un déplacement dudit bloc courant dans l'image ($I^k_{ref}$) précédemment codée-décodée de la première vue (k) et une information de résidu de prédiction ($res^k$)

correspondant à une différence entre le bloc courant et un bloc de prédiction ($pred^k$) dudit bloc courant, situé dans une image ($I^k_{ref}$) de référence de la première vue (k), ledit bloc de prédiction ($pred^k$) étant obtenu à partir d'une information de mouvement ($mv^k$) représentative d'un déplacement dudit bloc courant dans ladite image ($I^k_{ref}$) de référence de la première vue (k),

- coder ledit bloc courant par référence à une image ($I^{k-1}_{ref}$) précédemment codée-décodée de la deuxième vue (k-1), au cours duquel est estimée au moins une deuxième information de mouvement ($mv^{k-1}$) représentative d'un déplacement dudit bloc courant dans ladite image ($I^{k-1}_{ref}$) précédemment codée-décodée de la deuxième vue (k-1),

- obtenir une information de différence ($d^{k,k-1}$) correspondant à une différence calculée entre

a) ledit bloc de prédiction ($pred^k$) de ladite image ($I^k_{ref}$) de référence de la première vue (k) et

b) un bloc de prédiction ($pred^{k-1}$) de ladite image ($I^{k-1}_{ref}$) de référence de la deuxième vue (k-1) obtenu à partir de ladite information de mouvement ($mv^{k-1}$) représentative d'un déplacement dudit bloc courant dans ladite image ($I^{k-1}_{ref}$) de référence de la deuxième vue (k-1),

- coder sans perte ladite information de différence calculée ($d^{k,k-1}$)

- coder ladite deuxième information de mouvement ($mv^{k-1}$) et ladite information de résidu de prédiction ($res^k$).

**16.** Flux de données codées représentatif d'une vidéo comprenant au moins une première vue (k) et une deuxième vue (k-1) différente de la première vue, pour au moins un bloc d'une image courante de ladite première vue (k), dit bloc courant, le flux de données comprend au moins:

- une première information de mouvement ($mv^k$) représentative d'un déplacement dudit bloc courant dans une image de référence ($I^k_{ref}$) de la première vue (k),

- une deuxième information de mouvement ($mv^{k-1}$) représentative d'un déplacement dudit bloc courant dans une image de référence ($I^{k-1}_{ref}$) de la deuxième vue (k-1),

- une information d'un résidu de prédiction ($res^{k-1}$) correspondant à une différence entre le bloc courant et un bloc de prédiction ($pred^{k-1}$) dudit bloc courant situé dans ladite image ($I^{k-1}_{ref}$) de référence de la deuxième vue (k-1), ledit bloc de prédiction ($pred^{k-1}$) étant obtenu à partir de ladite deuxième information de mouvement

$(mv^{k-1})$,
- une information de résidu de prédiction $(res^k)$ correspondant à une différence entre le bloc courant et un bloc de prédiction $(pred^k)$ dudit bloc courant, situé dans une image $(I^k_{ref})$ de référence de la première vue $(k)$, ledit bloc de prédiction $(pred^k)$ étant obtenu à partir de ladite première information de mouvement $(mv^k)$,
- une information de différence $(d^{k,k-1})$ correspondant à une différence calculée entre

    a) un premier bloc courant reconstruit $(B^{k,k}_{rec})$ qui a été obtenu à partir de ladite image $(I^k_{ref})$ de référence de la première vue $(k)$ et à partir de ladite première information de mouvement $(mv^k)$ et
    b) un deuxième bloc courant reconstruit $(B^{k,k-1}_{rec})$ qui a été obtenu à partir de ladite image $(I^{k-1}_{ref})$ de référence de la deuxième vue $(k-1)$ et à partir de ladite deuxième information de mouvement $(mv^{k-1})$,ladite information de différence étant codée sans perte.

17. Flux de données codées représentatif d'une vidéo comprenant au moins une première vue $(k)$ et une deuxième vue $(k-1)$ différente de la première vue, pour au moins un bloc d'une image courante de ladite première vue $(k)$, dit bloc courant, le flux de données comprend au moins :

    - une première information de mouvement $(mv^k)$ représentative d'un déplacement dudit bloc courant dans une image de référence $(I^k_{ref})$ de la première vue $(k)$,
    - une deuxième information de mouvement $(mv^{k-1})$ représentative d'un déplacement dudit bloc courant dans une image de référence $(I^{k-1}_{ref})$ de la deuxième vue $(k-1)$,
    - une information de résidu de prédiction $(res^k)$ correspondant à une différence entre le bloc courant et un bloc de prédiction $(pred^k)$ dudit bloc courant, situé dans une image $(I^k_{ref})$ de référence de la première vue $(k)$, ledit bloc de prédiction $(pred^k)$ étant obtenu à partir de ladite première information de mouvement $(mv^k)$ représentative d'un déplacement dudit bloc courant dans ladite image de référence $(I^k_{ref})$ de la première vue $(k)$,
    - une information de différence $(d^{k,k-1})$ correspondant à une différence calculée entre

        a) ledit bloc de prédiction $(pred^k)$ de ladite image $(I^k_{ref})$ de référence de la première vue $(k)$ et
        b) un bloc de prédiction $(pred^{k-1})$ de ladite image $(I^{k-1}_{ref})$ de référence de la deuxième vue $(k-1)$ obtenu à partir de ladite information de mouvement $(mv^{k-1})$ représentative d'un déplacement dudit bloc courant dans ladite image $(I^{k-1}_{ref})$ de référence de la deuxième vue $(k-1)$, ladite information de différence étant codée sans perte.

18. Programme d'ordinateur comportant des instructions pour la mise en oeuvre du procédé de décodage selon l'une quelconque des revendications 1 à 7, ou pour la mise en oeuvre du procédé de codage selon l'une quelconque des revendications 10 à 13, lorsque ledit programme est exécuté par un ordinateur.

19. Support d'enregistrement lisible par ordinateur sur lequel est enregistré un programme d'ordinateur comprenant des instructions de code de programme pour l'exécution des étapes du procédé de décodage selon l'une quelconque des revendications 1 à 7, ou pour la mise en oeuvre du procédé de codage selon l'une quelconque des revendications 10 à 13, lorsque ledit programme est exécuté par un ordinateur.

**Patentansprüche**

1. Verfahren zur Decodierung eines Stroms codierter Daten, der für ein Video repräsentativ ist, das mindestens eine erste Ansicht $(k)$ und eine zweite Ansicht $(k-1)$ anders als die erste Ansicht $(k)$ enthält, das von einer Decodiervorrichtung durchgeführt wird, wobei die Decodiervorrichtung einen Speicher enthält, der mindestens ein zu einem Zeitpunkt vor einem aktuellen Decodierzeitpunkt vorher rekonstruiertes Bezugsbild $(I^{k-1}_{ref})$ der zweiten Ansicht $(k-1)$ enthält, wobei das Decodierverfahren für mindestens einen Block eines aktuellen Bilds der ersten Ansicht $(k)$, aktueller Block genannt, enthält:

    - Erhalt (E64), ausgehend mindestens vom Strom codierter Daten, einer dem aktuellen Block zugeordneten Bewegungsinformation $(mv^{k-1})$, wobei die Bewegungsinformation für eine Verschiebung des aktuellen Blocks im vorher rekonstruierten Bezugsbild der zweiten Ansicht $(k-1)$ repräsentativ ist,
    - Decodierung (E650, E651), ausgehend vom Strom codierter Daten, einer Information über einen Vorhersagerest $(res^k)$ entsprechend einer Differenz zwischen dem aktuellen Block und einem Vorhersageblock $(pred^k)$ des aktuellen Blocks, der sich in einem Bezugsbild $(I^k_{ref})$ der ersten Ansicht befindet, wobei der Vorhersageblock $(pred^k)$ ausgehend von einer Bewegungsinformation $(mv^k)$, die für eine Verschiebung des aktuellen Blocks im Bezugsbild $(I^k_{ref})$ der ersten Ansicht repräsentativ ist, und von einer Vorhersagerestinformation $(res^{k-1})$ entsprechend einer Differenz zwischen dem aktuellen Block und einem Vorhersageblock (pred$^{k-1}$) des aktuellen Blocks erhalten wird, der sich im Bezugsbild (I$^{k-1}_{ref}$) der zweiten Ansicht (k-1) befindet, wobei der Vorhersageblock (pred$^{k-1}$) ausgehend von der Bewegungsinformation (mv$^{k-1}$) erhalten wird,

- Decodierung (E67), ausgehend vom Strom codierter Daten, einer Differenzinformation (d$^{k,k-1}$) entsprechend einer Differenz, die bei der Codierung des aktuellen Blocks berechnet wurde, zwischen

a) einem rekonstruierten ersten aktuellen Block (B$^{k,k}_{rec}$), der ausgehend vom Bezugsbild (I$^{k}_{ref}$) der ersten Ansicht (k) und ausgehend von der Bewegungsinformation (mv$^{k}$) erhalten wurde, die für eine Verschiebung des aktuellen Blocks im Bezugsbild (I$^{k}_{ref}$) der ersten Ansicht (k) repräsentativ ist, und
b) einem rekonstruierten zweiten aktuellen Block (B$^{k,k-1}_{rec}$), der ausgehend von einem Bezugsbild (I$^{k-1}_{ref}$) der zweiten Ansicht (k-1) und ausgehend von der Bewegungsinformation (mv$^{k-1}$) erhalten wurde, die für eine Verschiebung des aktuellen Blocks im Bezugsbild (I$^{k-1}_{ref}$) der zweiten Ansicht (k-1) repräsentativ ist,

- Erhalt (E66) des Vorhersageblocks (pred$^{k-1}$) des Bezugsbilds (I$^{k-1}_{ref}$) der zweiten Ansicht (k-1) ausgehend vom Bezugsbild der zweiten Ansicht (k-1) und der erhaltenen Bewegungsinformation (mv$^{k-1}$),
- Rekonstruktion (E68) des aktuellen Blocks ausgehend vom Vorhersageblock (pred$^{k-1}$), den decodierten Vorhersagerestinformationen (res$^{k-1}$, res$^{k}$) und der decodierten Differenzinformation (d$^{k,k-1}$) .

**2.** Decodierverfahren eines Stroms codierter Daten, der für ein Video repräsentativ ist, das mindestens eine erste Ansicht (k) und eine zweite Ansicht (k-1) anders als die erste Ansicht (k) enthält, das von einer Decodiervorrichtung durchgeführt wird, wobei die Decodiervorrichtung einen Speicher enthält, der mindestens ein zu einem Zeitpunkt vor einem aktuellen Decodierzeitpunkt vorher rekonstruiertes Bezugsbild (I$^{k-1}_{ref}$) der zweiten Ansicht (k-1) enthält, wobei das Decodierverfahren für mindestens einen Block eines aktuellen Bilds der ersten Ansicht (k), aktueller Block genannt, enthält:

- Erhalt (E64), ausgehend von mindestens dem Strom codierter Daten, einer dem aktuellen Block zugeordneten Bewegungsinformation (mv$^{k-1}$), wobei die Bewegungsinformation für eine Verschiebung des aktuellen Blocks im vorher rekonstruierten Bezugsbild der zweiten Ansicht (k-1) repräsentativ ist,
- Decodierung (E650, E651), ausgehend vom Strom codierter Daten, einer Information eines Vorhersagerests (res$^{k}$) entsprechend einer Differenz zwischen dem aktuellen Block und einem Vorhersageblock (pred$^{k}$) des aktuellen Blocks, der sich in einem Bezugsbild (I$^{k}_{ref}$) der ersten Ansicht (k) befindet, wobei der Vorhersageblock (pred$^{k}$) ausgehend von einer Bewegungsinformation (mv$^{k}$) erhalten wird, die für eine Verschiebung des aktuellen Blocks im Bezugsbild (I$^{k}_{ref}$) der ersten Ansicht (k) repräsentativ ist,
- Decodierung (E67), ausgehend vom Strom codierter Daten, einer Differenzinformation (d$^{k,k-1}$) entsprechend einer Differenz, die bei der Codierung des aktuellen Blocks berechnet wurde, zwischen

a) dem Vorhersageblock (pred$^{k}$) des Bezugsbilds (I$^{k}_{ref}$) der ersten Ansicht (k) und
b) einem Vorhersageblock (pred$^{k-1}$) des Bezugsbilds (I$^{k-1}_{ref}$) der zweiten Ansicht (k-1), der ausgehend von der Bewegungsinformation (mv$^{k-1}$) erhalten wird, die für eine Verschiebung des aktuellen Blocks im Bezugsbild (I$^{k-1}_{ref}$) der zweiten Ansicht (k-1) repräsentativ ist,

- Erhalt (E66) des Vorhersageblocks (pred$^{k-1}$) des Bezugsbilds (I$^{k-1}_{ref}$) der zweiten Ansicht (k-1) ausgehend vom Bezugsbild der zweiten Ansicht (k-1) und von der erhaltenen Bewegungsinformation (mv$^{k-1}$),
- Rekonstruktion (E68) des aktuellen Blocks ausgehend vom Vorhersageblock (pred$^{k-1}$), von der decodierten Vorhersagerestinformation (res$^{k}$) und von der decodierten Differenzinformation (d$^{k,k-1}$).

**3.** Decodierverfahren nach Anspruch 2, wobei der Vorhersageblock (pred$^{k}$) des Bezugsbilds (I$^{k}_{ref}$) der ersten Ansicht (k) und der Vorhersageblock (pred$^{k-1}$) des Bezugsbilds (I$^{k-1}_{ref}$) der zweiten Ansicht (k-1) einer inversen Quantisierung einer an den aktuellen Block während der Codierung des aktuellen Blocks angewendeten Quantisierung unterzogen werden.

**4.** Decodierverfahren nach Anspruch 2, wobei ein Parameter von der decodierten Differenzinformation (d$^{k,k-1}$) abgezogen wird.

**5.** Decodierverfahren nach Anspruch 4, das außerdem die Decodierung einer für den Parameter repräsentativen Information enthält.

**6.** Decodierverfahren nach einem der Ansprüche 1 bis 5, wobei die erste Ansicht eine vorhergehende oder nachfolgende Ansicht der zweiten Ansicht gemäß einer vorbestimmten Position der Ansichten im Video ist.

**7.** Decodierverfahren nach einem der Ansprüche 1 bis 6, wobei der Erhalt der dem aktuellen Block zugeordneten Bewegungsinformation enthält:

- die Decodierung einer ersten Bewegungsinformation ($dmv^{k-1}$), die für eine Verschiebung im vorher rekonstruierten Bezugsbild ($I^{k-1}_{ref}$) der zweiten Ansicht (k-1) eines Bezugsblocks ($B^{k-1}_{t-1}$) des aktuellen Blocks ($B^k_c$) repräsentativ ist, wobei der Bezugsblock ($B^{k-1}_{t-1}$) dem aktuellen Block ($B^k_c$) verschoben in einem Bezugsbild ($I^k_{ref}$) der ersten Ansicht (k) entspricht,
- die Decodierung einer zweiten Bewegungsinformation ($mv^k$), die für eine Verschiebung des aktuellen Blocks ($B^k_c$) im Bezugsbild ($I^k_{ref}$) der ersten Ansicht (k) repräsentativ ist,
- die Hinzufügung der ersten und der zweiten Bewegungsinformation.

**8.** Decodiervorrichtung eines Stroms codierter Daten (Fix), der für ein Video repräsentativ ist, das mindestens eine erste Ansicht (k) und eine zweite Ansicht (k-1) anders als die erste Ansicht enthält, wobei die Decodiervorrichtung einen Speicher (MEMO) enthält, der mindestens ein zu einem Zeitpunkt vor einem aktuellen Decodierzeitpunkt vorher rekonstruiertes Bezugsbild ($I^{k-1}_{ref}$) der zweiten Ansicht (k-1) enthält, wobei die Decodiervorrichtung konfiguriert ist, für mindestens einen Block eines aktuellen Bilds der ersten Ansicht (k), aktueller Block genannt:

- ausgehend mindestens von dem Strom codierter Daten eine dem aktuellen Block zugeordnete Bewegungsinformation ($mv^{k-1}$) zu erhalten, wobei die Bewegungsinformation für eine Verschiebung des aktuellen Blocks im vorher rekonstruierten Bezugsbild der zweiten Ansicht (k-1) repräsentativ ist,
- ausgehend vom Strom codierter Daten eine Information eines Vorhersagerests ($res^k$) entsprechend einer Differenz zwischen dem aktuellen Block und einem Vorhersageblock ($pred^k$) des aktuellen Blocks, der sich in einem Bezugsbild ($I^k_{ref}$) der ersten Ansicht befindet, wobei der Vorhersageblock ($pred^k$) ausgehend von einer Bewegungsinformation ($mv^k$) erhalten wird, die für eine Verschiebung des aktuellen Blocks im Bezugsbild ($I^k_{ref}$) der ersten Ansicht (k) repräsentativ ist, und eine Information eines Vorhersagerests ($res^{k-1}$) entsprechend einer Differenz zwischen dem aktuellen Block und einem Vorhersageblock ($pred^{k-1}$) des aktuellen Blocks zu decodieren, der sich im Bezugsbild ($I^{k-1}_{ref}$) der zweiten Ansicht (k-1) befindet, wobei der Vorhersageblock ($pred^{k-1}$) ausgehend von der Bewegungsinformation ($mv^{k-1}$) erhalten wird,
- ausgehend vom Strom codierter Daten eine Differenzinformation ($d^{k,k-1}$) entsprechend einer Differenz zu decodieren, die bei der Codierung des aktuellen Blocks berechnet wurde zwischen

a) einem ersten rekonstruierten aktuellen Block ($B^{k,k}_{rec}$), der ausgehend vom Bezugsbild ($I^k_{ref}$) der ersten Ansicht (k) und ausgehend von der Bewegungsinformation ($mv^k$) erhalten wurde, die für eine Verschiebung des aktuellen Blocks im Bezugsbild ($I^k_{ref}$) der ersten Ansicht (k) repräsentativ ist, und

b) einem zweiten rekonstruierten aktuellen Block ($B^{k,k-1}_{rec}$), der ausgehend vom Bezugsbild ($I^{k-1}_{ref}$) der zweiten Ansicht (k-1) und ausgehend von der Bewegungsinformation ($mv^{k-1}$) erhalten wurde, die für eine Verschiebung des aktuellen Blocks im Bezugsbild ($I^{k-1}_{ref}$) der zweiten Ansicht (k-1) repräsentativ ist,

- den Vorhersageblock ($pred^{k-1}$) des Bezugsbilds ($I^{k-1}_{ref}$) der zweiten Ansicht (k-1) ausgehend vom Bezugsbild der zweiten Ansicht und von der erhaltenen Bewegungsinformation ($mv^{k-1}$) zu erhalten,
- den aktuellen Block ausgehend vom Vorhersageblock ($pred^{k-1}$), von den decodierten Vorhersagerestinformationen ($res^{k-1}$, $res^k$) und von der decodierten Differenzinformation ($d^{k,k-1}$) zu rekonstruieren.

**9.** Decodiervorrichtung eines Stroms codierter Daten (Fix), der für ein Video repräsentativ ist, das mindestens eine erste Ansicht (k) und eine zweite Ansicht (k-1) anders als die erste Ansicht enthält, wobei die Decodiervorrichtung einen Speicher (MEMO) enthält, der mindestens ein zu einem Zeitpunkt vor einem aktuellen Decodierzeitpunkt vorher rekonstruiertes Bezugsbild ($I^{k-1}_{ref}$) der zweiten Ansicht (k-1) enthält, wobei die Decodiervorrichtung konfiguriert ist, für mindestens einen Block eines aktuellen Bilds der ersten Ansicht (k), aktueller Block genannt:

- ausgehend mindestens vom Strom codierter Daten eine dem aktuellen Block zugeordnete Bewegungsinformation ($mv^{k-1}$) zu erhalten, wobei die Bewegungsinformation für eine Verschiebung des aktuellen Blocks im vorher rekonstruierten Bezugsbild der zweiten Ansicht (k-1) repräsentativ ist,
- ausgehend vom Strom codierter Daten eine Information eines Vorhersagerests ($res^k$) entsprechend einer Differenz zwischen dem aktuellen Block und einem Vorhersageblock ($pred^k$) des aktuellen Blocks zu decodieren, der sich in einem Bezugsbild ($I^k_{ref}$) der ersten Ansicht (k) befindet, wobei der Vorhersageblock ($pred^k$) ausgehend von einer Bewegungsinformation ($mv^k$) erhalten wird, die für eine Verschiebung des aktuellen Blocks im Bezugsbild ($I^k_{ref}$) der ersten Ansicht (k) repräsentativ ist,
- ausgehend vom Strom codierter Daten eine Differenzinformation ($d^{k,k-1}$) entsprechend einer Differenz zu decodieren, die bei der Codierung des aktuellen Blocks berechnet wurde zwischen

    a) dem Vorhersageblock ($pred^k$) des Bezugsbilds ($I^k_{ref}$) der ersten Ansicht (k) und
    b) einem Vorhersageblock ($pred^{k-1}$) des Bezugsbilds ($I^{k-1}_{ref}$) der zweiten Ansicht (k-1), der ausgehend von der Bewegungsinformation ($mv^{k-1}$) erhalten wird, die für eine Verschiebung des aktuellen Blocks im Bezugsbild ($I^{k-1}_{ref}$) der zweiten Ansicht (k-1) repräsentativ ist,

- den Vorhersageblock ($pred^{k-1}$) des Bezugsbilds ($I^{k-1}_{ref}$) der zweiten Ansicht (k-1) ausgehend vom Bezugsbild der zweiten Ansicht (k-1) und der erhaltenen Bewegungsinformation ($mv^{k-1}$) zu erhalten,
- den aktuellen Block ausgehend vom Vorhersageblock ($pred^{k-1}$), von der decodierten Vorhersagerestinformation ($res^k$) und von der decodierten Differenzinformation ($d^{k,k-1}$) zu rekonstruieren.

10. Verfahren zur Codierung eines Videos, das mindestens eine erste Ansicht (k) und eine zweite Ansicht (k-1) anders als die erste Ansicht (k) enthält, wobei das Codierverfahren für mindestens einen Block eines aktuellen Bilds der ersten Ansicht (k), aktueller Block genannt, enthält:

    - Codierung (E20) des aktuellen Blocks durch Bezug auf ein zu einem Zeitpunkt vor einem aktuellen Codierzeitpunkt vorher codiertes-decodiertes Bild ($I^k_{ref}$) der ersten Ansicht (k), während der eine erste Bewegungsinformation ($mv^k$), die für eine Verschiebung des aktuellen Blocks im vorher codierten-decodierten Bild ($I^k_{ref}$) der ersten Ansicht (k) repräsentativ ist, und eine Vorhersagerestinformation ($res^k$) entsprechend einer Differenz zwischen dem aktuellen Block und einem Vorhersageblock ($pred^k$) des aktuellen Blocks geschätzt werden, der sich in einem Bezugsbild ($I^k_{ref}$) der ersten Ansicht (k) befindet, wobei der Vorhersageblock ($pred^k$) ausgehend von der ersten Bewegungsinformation ($mv^k$) erhalten wird,
    - Codierung (E210, E240) des aktuellen Blocks durch Bezug auf ein vorher codiertes-decodiertes Bild ($I^{k-1}_{ref}$) der zweiten Ansicht (k-1), während der mindestens eine zweite Bewegungsinformation ($mv^{k-1}$), die für eine Verschiebung des aktuellen Blocks im vorher codierten-decodierten Bild ($I^{k-1}_{ref}$) der zweiten Ansicht (k-1) repräsentativ ist, und eine Vorhersagerestinformation ($res^{k-1}$) entsprechend einer Differenz zwischen dem aktuellen Block und einem Vorhersageblock ($pred^{k-1}$) des aktuellen Blocks geschätzt wird, der sich im Bezugsbild ($I^{k-1}_{ref}$) der zweiten Ansicht (k-1) befindet, wobei der Vorhersageblock ($pred^{k-1}$) ausgehend von der Bewegungsinformation ($mv^{k-1}$) erhalten wird,
- Erhalt (E220, E250) einer Differenzinformation ($d^{k,k-1}$) entsprechend einer Differenz berechnet zwischen

    a) einem ersten rekonstruierten aktuellen Block ($B^{k,k}_{rec}$), der ausgehend vom Bezugsbild ($I^k_{ref}$) der ersten Ansicht (k) und ausgehend von der ersten Bewegungsinformation ($mv^k$) erhalten wurde, und
    b) einem zweiten rekonstruierten aktuellen Block ($B^{k,k-1}_{rec}$), der ausgehend vom Bezugsbild ($I^{k-1}_{ref}$) der zweiten Ansicht (k-1) und ausgehend von der zweiten Bewegungsinformation ($mv^{k-1}$) erhalten wurde,

- verlustfreie Codierung (E23, E26) der berechneten Differenzinformation ($d^{k,k-1}$),
- Codierung der zweiten Bewegungsinformation ($mv^{k-1}$) und der Vorhersagerestinformationen ($res^{k-1}$, $res^k$).

11. Codierverfahren nach Anspruch 10, wobei die berechnete Differenzinformation zwischen dem rekonstruierten ersten Block und dem rekonstruierten zweiten aktuellen Block durch die Auswahl eines Modus unter den folgenden Modi erhalten wird, abhängig von einem Rate-Distortion-Kriterium :

    - Codierung eines für das Ergebnis des Abziehens des rekonstruierten zweiten aktuellen Blocks ($B^{k,k-1}_{rec}$) vom rekonstruierten ersten aktuellen Block ($B^{k,k}_{rec}$) repräsentativen Signals,
    - Codierung eines für das Ergebnis des Abziehens des rekonstruierten ersten aktuellen Blocks ($B^{k,k}_{rec}$) vom rekonstruierten zweiten aktuellen Block ($B^{k,k-1}_{rec}$) repräsentativen Signals,

wobei das Codierverfahren die Codierung einer für den ausgewählten Modus repräsentativen Information enthält.

12. Codierverfahren eines Videos, das mindestens eine erste Ansicht (k) und eine zweite Ansicht (k-1) anders als die erste Ansicht (k) enthält, wobei das Codierverfahren für mindestens einen Block eines aktuellen Bilds der ersten Ansicht (k), aktueller Block genannt, enthält :

- Codierung (E20) des aktuellen Blocks durch Bezug auf ein zu einem Zeitpunkt vor einem aktuellen Codierzeitpunkt vorher codiertes-decodiertes Bild ($I^k_{ref}$) der ersten Ansicht (k), während der eine erste Bewegungsinformation ($mv^k$), die für eine Verschiebung des aktuellen Blocks im vorher codierten-decodierten Bild ($I^k_{ref}$) der ersten Ansicht (k) repräsentativ ist, und eine Vorhersagerestinformation ($res^k$) entsprechend einer Differenz zwischen dem aktuellen Block und einem Vorhersageblock ($pred^k$) des aktuellen Blocks geschätzt werden, der sich in einem Bezugsbild ($I^k_{ref}$) der ersten Ansicht (k) befindet, wobei der Vorhersageblock ($pred^k$) ausgehend von einer Bewegungsinformation ($mv^k$) erhalten wird, die für eine Verschiebung des aktuellen Blocks im Bezugsbild ($I^k_{ref}$) der ersten Ansicht (k) repräsentativ ist,
- Codierung (E211, E241) des aktuellen Blocks durch Bezug auf ein vorher codiertes-decodiertes Bild ($I^{k-1}_{ref}$) der zweiten Ansicht (k-1), während der mindestens eine zweite Bewegungsinformation ($mv^{k-1}$), die für eine Verschiebung des aktuellen Blocks im vorher codierten-decodierten Bild ($I^{k-1}_{ref}$) der zweiten Ansicht (k-1) repräsentativ ist, geschätzt wird,
- Erhalt (E221, E251) einer Differenzinformation ($d^{k,k-1}$) entsprechend einer berechneten Differenz zwischen

a) dem Vorhersageblock ($pred^k$) des Bezugsbilds ($I^k_{ref}$) der ersten Ansicht (k) und
b) einem Vorhersageblock ($pred^{k-1}$) des Bezugsbilds ($I^{k-1}_{ref}$) der zweiten Ansicht (k-1), der ausgehend von der Bewegungsinformation ($mv^{k-1}$) erhalten wird, die für eine Verschiebung des aktuellen Blocks im Bezugsbild ($I^{k-1}_{ref}$) der zweiten Ansicht (k-1) repräsentativ ist,

- verlustfreie Codierung (E23, E26) der berechneten Differenzinformation ($d^{k,k-1}$),
- Codierung der zweiten Bewegungsinformation ($mv^{k-1}$) und der Vorhersagerestinformation ($res^k$).

13. Codierverfahren nach Anspruch 12, wobei die berechnete Differenzinformation zwischen dem Vorhersageblock ($pred^k$) des Bezugsbilds ($I^k_{ref}$) der ersten Ansicht (k) und dem Vorhersageblock ($pred^{k-1}$) des Bezugsbilds ($I^{k-1}_{ref}$) der zweiten Ansicht (k-1) durch die Auswahl eines Modus unter den folgenden Modi abhängig von einem Rate-Distortion-Kriterium erhalten wird:

- Codierung eines für das Ergebnis des Abziehens des Vorhersageblocks ($pred^{k-1}$) des Bezugsbilds ($I^{k-1}_{ref}$) der zweiten Ansicht (k-1) vom Vorhersageblock ($pred^k$) des Bezugsbilds ($I^k_{ref}$) der ersten Ansicht (k) repräsentativen Signals,
- Codierung eines für das Ergebnis des Abziehens des Vorhersageblocks ($pred^k$) des Bezugsbilds ($I^k_{ref}$) der ersten Ansicht (k) vom Vorhersageblock ($pred^{k-1}$) des Bezugsbilds ($I^{k-1}_{ref}$) der zweiten Ansicht (k-1) repräsentativen Signals,

wobei das Codierverfahren die Codierung einer für den ausgewählten Modus repräsentativen Information enthält.

14. Codiervorrichtung eines Videos, das mindestens eine erste Ansicht (k) und eine zweite Ansicht (k-1) anders als die erste Ansicht (k) enthält, wobei die Codiervorrichtung konfiguriert ist, für mindestens einen Block eines aktuellen Bilds der ersten Ansicht (k), aktueller Block genannt:

- den aktuellen Block durch Bezug auf ein zu einem Zeitpunkt vor einem aktuellen Codierzeitpunkt vorher codiertes-decodiertes Bild ($I^k_{ref}$) der ersten Ansicht (k) zu codieren, wobei eine erste Bewegungsinformation ($mv^k$), die für eine Verschiebung des aktuellen Blocks im vorher codierten-decodierten Bild ($I^k_{ref}$) der ersten Ansicht (k) repräsentativ ist, und eine Vorhersagerestinformation ($res^k$) entsprechend einer Differenz zwischen dem aktuellen Block und einem Vorhersageblock ($pred^k$) des aktuellen Blocks geschätzt werden, der sich in einem Bezugsbild ($I^k_{ref}$) der ersten Ansicht (k) befindet, wobei der Vorhersageblock ($pred^k$) ausgehend von der ersten Bewegungsinformation ($mv^k$) erhalten wird,
- den aktuellen Block durch Bezug auf ein vorher codiertes-decodiertes Bild ($I^{k-1}_{ref}$) der zweiten Ansicht (k-1) zu codieren, wobei mindestens eine zweite Bewegungsinformation ($mv^{k-1}$), die für eine Verschiebung des aktuellen Blocks im vorher codierten-decodierten Bild ($I^{k-1}_{ref}$) der zweiten Ansicht (k-1) repräsentativ ist, und eine Vorhersagerestinformation ($res^{k-1}$) entsprechend einer Differenz zwischen dem aktuellen Block und einem Vorhersageblock ($pred^{k-1}$) des aktuellen Blocks geschätzt werden, der sich im Bezugsbild ($I^{k-1}_{ref}$) der zweiten Ansicht (k-1) befindet, wobei der Vorhersageblock ($pred^{k-1}$) ausgehend von der zweiten Bewegungsinformation ($mv^{k-1}$) erhalten wird,
- eine Differenzinformation ($d^{k,k-1}$) entsprechend einer berechneten Differenz zu erhalten zwischen

a) einem rekonstruierten ersten aktuellen Block ($B^{k,k}_{rec}$), der ausgehend vom Bezugsbild ($I^{k}_{ref}$) der ersten Ansicht (k) und ausgehend von der ersten Bewegungsinformation ($mv^{k}$) erhalten wurde, und
b) einem rekonstruierten zweiten aktuellen Block ($B^{k,k-1}_{rec}$), der ausgehend vom Bezugsbild ($I^{k-1}_{ref}$) der zweiten Ansicht (k-1) und ausgehend von der zweiten Bewegungsinformation ($mv^{k-1}$) erhalten wurde,

- die berechnete Differenzinformation ($d^{k,k-1}$) verlustfrei zu codieren,
- die zweite Bewegungsinformation ($mv^{k-1}$) und die Vorhersagerestinformationen ($res^{k-1}$, $res^{k}$) zu codieren.

15. Codiervorrichtung eines Videos, das mindestens eine erste Ansicht (k) und eine zweite Ansicht (k-1) anders als die erste Ansicht (k) enthält, wobei die Codiervorrichtung konfiguriert ist, für mindestens einen Block eines aktuellen Bilds der ersten Ansicht (k), aktueller Block genannt:

- den aktuellen Block durch Bezug auf ein zu einem Zeitpunkt vor einem aktuellen Codierzeitpunkt vorher codiertes-decodiertes Bild ($I^{k}_{ref}$) der ersten Ansicht (k) zu codieren, während dessen eine erste Bewegungsinformation ($mv^{k}$), die für eine Verschiebung des aktuellen Blocks im vorher codierten-decodierten Bild ($I^{k}_{ref}$) der ersten Ansicht (k) repräsentativ ist, und eine Vorhersagerestinformation ($res^{k}$) entsprechend einer Differenz zwischen dem aktuellen Block und einem Vorhersageblock ($pred^{k}$) des aktuellen Blocks geschätzt werden, der sich in einem Bezugsbild ($I^{k}_{ref}$) der ersten Ansicht (k) befindet, wobei der Vorhersageblock ($pred^{k}$) ausgehend von einer Bewegungsinformation ($mv^{k}$) erhalten wird, die für eine Verschiebung des aktuellen Blocks im Bezugsbild ($I^{k}_{ref}$) der ersten Ansicht (k) repräsentativ ist,
- den aktuellen Block durch Bezug auf ein vorher codiertes-decodiertes Bild ($I^{k-1}_{ref}$) der zweiten Ansicht (k-1) zu codieren, während dessen mindestens eine zweite Bewegungsinformation ($mv^{k-1}$) geschätzt wird, die für eine Verschiebung des aktuellen Blocks im vorher codierten-decodierten Bild ($I^{k-1}_{ref}$) der zweiten Ansicht (k-1) repräsentativ ist,
- eine Differenzinformation ($d^{k,k-1}$) entsprechend einer berechneten Differenz zu erhalten zwischen

a) dem Vorhersageblock ($pred^{k}$) des Bezugsbilds ($I^{k}_{ref}$) der ersten Ansicht (k) und
b) einem Vorhersageblock ($pred^{k-1}$) des Bezugsbilds ($I^{k-1}_{ref}$) der zweiten Ansicht (k-1), der ausgehend von der Bewegungsinformation ($mv^{k-1}$) erhalten wird, die für eine Verschiebung des aktuellen Blocks im Bezugsbild ($I^{k-1}_{ref}$) der zweiten Ansicht (k-1) repräsentativ ist,

- die berechnete Differenzinformation ($d^{k,k-1}$) verlustfrei zu codieren,
- die zweite Bewegungsinformation ($mv^{k-1}$) und die Vorhersagerestinformation ($res^{k}$) zu codieren.

16. Strom codierter Daten, der für ein Video repräsentativ ist, das mindestens eine erste Ansicht (k) und eine zweite Ansicht (k-1) anders als die erste Ansicht (k) enthält, für mindestens einen Block eines aktuellen Bilds der ersten Ansicht (k), aktueller Block genannt, wobei der Datenstrom mindestens enthält:

- eine erste Bewegungsinformation ($mv^{k}$), die für eine Verschiebung des aktuellen Blocks in einem Bezugsbild ($I^{k}_{ref}$) der ersten Ansicht (k) repräsentativ ist,
- eine zweite Bewegungsinformation ($mv^{k-1}$), die für eine Verschiebung des aktuellen Blocks in einem Bezugsbild ($I^{k-1}_{ref}$) der zweiten Ansicht (k-1) repräsentativ ist,
- eine Vorhersagerestinformation ($res^{k-1}$) entsprechend einer Differenz zwischen dem aktuellen Block und einem Vorhersageblock ($pred^{k-1}$) des aktuellen Blocks, der sich im Bezugsbild ($I^{k-1}_{ref}$) der zweiten Ansicht (k-1) befindet, wobei der Vorhersageblock ($pred^{k-1}$) ausgehend von der zweiten Bewegungsinformation ($mv^{k-1}$) erhalten wird,
- eine Vorhersagerestinformation ($res^{k}$) entsprechend einer Differenz zwischen dem aktuellen Block und einem Vorhersageblock ($pred^{k}$) des aktuellen Blocks, der sich in einem Bezugsbild ($I^{k}_{ref}$) der ersten Ansicht (k) befindet, wobei der Vorhersageblock ($pred^{k}$) ausgehend von der ersten Bewegungsinformation ($mv^{k}$) erhalten wird,
- eine Differenzinformation ($d^{k,k-1}$) entsprechend einer berechneten Differenz zwischen

a) einem rekonstruierten ersten aktuellen Block ($B^{k,k}_{rec}$), der ausgehend vom Bezugsbild ($I^{k}_{ref}$) der ersten Ansicht (k) und ausgehend von der ersten Bewegungsinformation ($mv^{k}$) erhalten wurde, und
b) einem rekonstruierten zweiten aktuellen Block ($B^{k,k-1}_{rec}$), der ausgehend vom Bezugsbild ($I^{k-1}_{ref}$) der zweiten Ansicht (k-1) und ausgehend von der zweiten Bewegungsinformation ($mv^{k-1}$) erhalten wurde, wobei die Differenzinformation verlustfrei codiert wird.

**17.** Strom codierter Daten, der für ein Video repräsentativ ist, das mindestens eine erste Ansicht (k) und eine zweite Ansicht (k-1) anders als die erste Ansicht (k) enthält, für mindestens einen Block eines aktuellen Bilds der ersten Ansicht (k), aktueller Block genannt, wobei der Datenstrom mindestens enthält:

- eine erste Bewegungsinformation ($mv^k$), die für eine Verschiebung des aktuellen Blocks in einem Bezugsbild ($I^k_{ref}$) der ersten Ansicht (k) repräsentativ ist,
- eine zweite Bewegungsinformation ($mv^{k-1}$), die für eine Verschiebung des aktuellen Blocks in einem Bezugsbild ($I^{k-1}_{ref}$) der zweiten Ansicht (k-1) repräsentativ ist,
- eine Vorhersagerestinformation ($res^k$) entsprechend einer Differenz zwischen dem aktuellen Block und einem Vorhersageblock ($pred^k$) des aktuellen Blocks, der sich in einem Bezugsbild ($I^k_{ref}$) der ersten Ansicht (k) befindet, wobei der Vorhersageblock ($pred^k$) ausgehend von der ersten Bewegungsinformation ($mv^k$) erhalten wird, die für eine Verschiebung des aktuellen Blocks im Bezugsbild ($I^k_{ref}$) der ersten Ansicht (k) repräsentativ ist,
- eine Differenzinformation ($d^{k,k-1}$) entsprechend einer berechneten Differenz zwischen

a) dem Vorhersageblock ($pred^k$) des Bezugsbilds ($I^k_{ref}$) der ersten Ansicht (k) und
b) einem Vorhersageblock ($pred^{k-1}$) des Bezugsbilds ($I^{k-1}_{ref}$) der zweiten Ansicht (k-1), der ausgehend von der Bewegungsinformation ($mv^{k-1}$) erhalten wird, die für eine Verschiebung des aktuellen Blocks im Bezugsbild ($I^{k-1}_{ref}$) der zweiten Ansicht (k-1) repräsentativ ist, wobei die Differenzinformation verlustfrei codiert wird.

**18.** Computerprogramm, das Anweisungen zur Durchführung des Decodierverfahrens nach einem der Ansprüche 1 bis 7 oder zur Durchführung des Codierverfahrens nach einem der Ansprüche 10 bis 13 aufweist, wenn das Programm von einem Computer ausgeführt wird.

**19.** Computerlesbarer Aufzeichnungsträger, auf dem ein Computerprogramm aufgezeichnet ist, das Programmcodeanweisungen zur Ausführung der Schritte des Decodierverfahrens nach einem der Ansprüche 1 bis 7 oder zur Durchführung des Codierverfahrens nach einem der Ansprüche 10 bis 13 enthält, wenn das Programm von einem Computer ausgeführt wird.

**Claims**

**1.** Method for decoding a coded data stream which is representative of a video comprising at least a first view (k) and a second view (k-1) which is different from the first view (k), implemented by a decoding device, said decoding device comprising a memory comprising at least one previously reconstructed reference image ($I^{k-1}_{ref}$) of the second view (k-1) at an instant prior to a current decoding instant, the decoding method comprising, for at least one block of a current image of the first view (k), referred to as the current block:

- obtaining (E64), on the basis of at least the coded data stream, a motion information item ($mv^{k-1}$) associated with said current block, said motion information item being representative of a displacement of said current block in said previously reconstructed reference image of the second view (k-1),
- decoding (E650, E651), on the basis of the coded data stream, a prediction residue information item ($res^k$) corresponding to a difference between the current block and a prediction block ($pred^k$) of said current block, located in a reference image ($I^k_{ref}$) of the first view, said prediction block ($pred^k$) being obtained on the basis of a motion information item ($mv^k$) which is representative of a displacement of said current block in said reference image ($I^k_{ref}$) of the first view and a prediction residue information item ($res^{k-1}$) corresponding to a difference between the current block and a prediction block ($pred^{k-1}$) of said current block, located in said reference image ($I^{k-1}_{ref}$) of the second view (k-1), said prediction block ($pred^{k-1}$) being obtained on the basis of said motion information item ($mv^{k-1}$),
- decoding (E67), on the basis of the coded data stream, a difference information item ($d^{k,k-1}$) corresponding to a difference which was calculated when coding the current block, between

a) a first reconstructed current block ($B^{k,k}_{rec}$), which was obtained on the basis of said reference image ($I^k_{ref}$) of the first view (k) and on the basis of said motion information item ($mv^k$) which is representative of a displacement of said current block in said reference image ($I^k_{ref}$) of the first view (k) and
b) a second reconstructed current block ($B^{k,k-1}_{rec}$) which was obtained on the basis of a reference image ($I^{k-1}_{ref}$) of the second view (k-1) and on the basis of said motion information item ($mv^{k-1}$) which is representative of a displacement of said current block in said reference image ($I^{k-1}_{ref}$) of the second view (k-1),

- obtaining (E66) the prediction block (pred$^{k-1}$) of the reference image ($I^{k-1}_{ref}$) of the second view (k-1) on the basis of said reference image of said second view (k-1) and said obtained motion information item (mv$^{k-1}$),
- reconstructing (E68) said current block on the basis of the prediction block (pred$^{k-1}$), said decoded prediction residue information items (res$^{k-1}$, res$^k$) and said decoded difference information item (d$^{k,k-1}$) .

2. Method for decoding a coded data stream which is representative of a video comprising at least a first view (k) and a second view (k-1) which is different from the first view (k), implemented by a decoding device, said decoding device comprising a memory comprising at least one previously reconstructed reference image ($I^{k-1}_{ref}$) of the second view (k-1) at an instant prior to a current decoding instant, the decoding method comprising, for at least one block of a current image of the first view (k), referred to as the current block:

   - obtaining (E64), on the basis of at least the coded data stream, a motion information item (mv$^{k-1}$) associated with said current block, said motion information item being representative of a displacement of said current block in said previously reconstructed reference image of the second view (k-1),
   - decoding (E650, E651), on the basis of the coded data stream, a prediction residue information item (res$^k$) corresponding to a difference between the current block and a prediction block (pred$^k$) of said current block, located in a reference image ($I^k_{ref}$) of the first view (k), said prediction block (pred$^k$) being obtained on the basis of a motion information item (mv$^k$) which is representative of a displacement of said current block in said reference image ($I^k_{ref}$) of the first view (k),
   - decoding (E67), on the basis of the coded data stream, a difference information item (d$^{k,k-1}$) corresponding to a difference which was calculated when coding the current block, between

      a) said prediction block (pred$^k$) of said reference image ($I^k_{ref}$) of the first view (k) and
      b) a prediction block (pred$^{k-1}$) of said reference image ($I^{k-1}_{ref}$) of the second view (k-1) obtained on the basis of said motion information item (mv$^{k-1}$) which is representative of a displacement of said current block in said reference image ($I^{k-1}_{ref}$) of the second view (k-1),

- obtaining (E66) the prediction block (pred$^{k-1}$) of the reference image ($I^{k-1}_{ref}$) of the second view (k-1) on the basis of said reference image of said second view (k-1) and said obtained motion information item (mv$^{k-1}$),
- reconstructing (E68) said current block on the basis of the prediction block (pred$^{k-1}$), said decoded prediction residue information item (res$^k$) and said decoded difference information item (d$^{k,k-1}$).

3. Decoding method according to Claim 2, wherein the prediction block (pred$^k$) of said reference image ($I^k_{ref}$) of the first view (k) and the prediction block (pred$^{k-1}$) of said reference image ($I^{k-1}_{ref}$) of the second view (k-1) are subjected to a quantization which is the inverse of a quantization applied to the current block when coding the current block.

4. Decoding method according to Claim 2, wherein a parameter is subtracted from the decoded difference information item (d$^{k,k-1}$).

5. Decoding method according to Claim 4, further comprising decoding an information item which is representative of said parameter.

6. Decoding method according to any one of Claims 1 to 5, wherein the first view is a view preceding or following the second view according to a predetermined position of the views in the video.

7. Decoding method according any one of Claims 1 to 6, wherein obtaining said motion information item associated with said current block comprises:

   - decoding a first motion information item (dmv$^{k-1}$) which is representative of a displacement in the previously reconstructed reference image ($I^{k-1}_{ref}$) of the second view (k-1) of a reference block (B$^{k-1}_{t-1}$) of said current block (B$^k_c$), said reference block (B$^{k-1}_{t-1}$) corresponding to said current block (B$^k_c$) displaced in a reference image ($I^k_{ref}$) of the first view (k),
   - decoding a second motion information item (mv$^k$) which is representative of a displacement of said current block (B$^k_c$) in said reference image ($I^k_{ref}$) of the first view (k),
   - adding the first and the second motion information item.

8. Device for decoding a coded data stream (Flx) which is representative of a video comprising at least a first view (k) and a second view (k-1) which is different from the first view, said decoding device comprising a memory (MEMO) comprising at least one previously reconstructed reference image ($I^{k-1}_{ref}$) of the second view (k-1) at an instant prior to a current decoding instant, said decoding device being configured to, for at least one block of a current image of the first view (k), referred to as the current block:

- obtain, on the basis of at least the coded data stream, a motion information item ($mv^{k-1}$) associated with said current block, said motion information item being representative of a displacement of said current block in said previously reconstructed reference image of the second view (k-1),

- decode, on the basis of the coded data stream, a prediction residue information item ($res^k$) corresponding to a difference between the current block and a prediction block ($pred^k$) of said current block, located in a reference image ($I^k_{ref}$) of the first view, said prediction block ($pred^k$) being obtained on the basis of a motion information item ($mv^k$) which is representative of a displacement of said current block in said reference image ($I^k_{ref}$) of the first view (k) and a prediction residue information item ($res^{k-1}$) corresponding to a difference between the current block and a prediction block ($pred^{k-1}$) of said current block, located in said reference image ($I^{k-1}_{ref}$) of the second view (k-1), said prediction block ($pred^{k-1}$) being obtained on the basis of said motion information item ($mv^{k-1}$),

- decode, on the basis of the coded data stream, a difference information item ($d^{k,k-1}$) corresponding to a difference which was calculated when coding the current block, between

a) a first reconstructed current block ($B^{k,k}_{rec}$) which was obtained on the basis of said reference image ($I^k_{ref}$) of the first view (k) and on the basis of said motion information item ($mv^k$) which is representative of a displacement of said current block in said reference image ($I^k_{ref}$) of the first view (k) and

b) a second reconstructed current block ($B^{k,k-1}_{rec}$) which was obtained on the basis of said reference image ($I^{k-1}_{ref}$) of the second view (k-1) and on the basis of said motion information item ($mv^{k-1}$) which is representative of a displacement of said current block in said reference image ($I^{k-1}_{ref}$) of the second view (k-1),

- obtain the prediction block ($pred^{k-1}$) of the reference image ($I^{k-1}_{ref}$) of the second view (k-1) on the basis of the reference image of said second view and said obtained motion information item ($mv^{k-1}$),

- reconstruct said current block on the basis of the prediction block ($pred^{k-1}$), said decoded prediction residue information items ($res^{k-1}$, $res^k$)

and said decoded difference information item ($d^{k,k-1}$).

**9.** Device for decoding a coded data stream (Flx) which is representative of a video comprising at least a first view (k) and a second view (k-1) which is different from the first view, said decoding device comprising a memory (MEMO) comprising at least one previously reconstructed reference image ($I^{k-1}_{ref}$) of the second view (k-1) at an instant prior to a current decoding instant, said decoding device being configured to, for at least one block of a current image of the first view (k), referred to as the current block:

- obtain, on the basis of at least the coded data stream, a motion information item ($mv^{k-1}$) associated with said current block, said motion information item being representative of a displacement of said current block in said previously reconstructed reference image of the second view (k-1),

- decode, on the basis of the coded data stream, a prediction residue information item ($res^k$) corresponding to a difference between the current block and a prediction block ($pred^k$) of said current block, located in a reference image ($I^k_{ref}$) of the first view (k), said prediction block ($pred^k$) being obtained on the basis of a motion information item ($mv^k$) which is representative of a displacement of said current block in said reference image ($I^k_{ref}$) of the first view (k),

- decode, on the basis of the coded data stream, a difference information item ($d^{k,k-1}$) corresponding to a difference which was calculated when coding the current block, between

a) said prediction block ($pred^k$) of the reference image ($I^k_{ref}$) of the first view (k) and
b) a prediction block ($pred^{k-1}$) of said reference image ($I^{k-1}_{ref}$) of the second view (k-1) obtained on the basis of said motion information item ($mv^{k-1}$) which is representative of a displacement of said current block in said reference image ($I^{k-1}_{ref}$) of the second view (k-1),

- obtain the prediction block ($pred^{k-1}$) of the reference image ($I^{k-1}_{ref}$) of the second view (k-1) on the basis of said reference image of said second view (k-1) and said obtained motion information item ($mv^{k-1}$),

- reconstruct the current block on the basis of the prediction block ($pred^{k-1}$), said decoded prediction residue information item ($res^k$) and said decoded difference information item ($d^{k,k-1}$).

**10.** Method for coding a video comprising at least a first view (k) and a second view (k-1) which is different from the first view (k), the coding method comprising, for at least one block of a current image of said first view (k), referred to as the current block:

- coding (E20) said current block with reference to a previously coded-decoded image ($I^k_{ref}$) of the first view (k) at an instant prior to a current coding instant, during which a first motion information item ($mv^k$) which is representative of a displacement of said current block in the previously coded-decoded image ($I^k_{ref}$) of the first view (k) and a prediction residue information item ($res^k$) corresponding to a difference between the current block and a prediction block ($pred^k$) of said current block, located in a reference image ($I^k_{ref}$) of the first view (k), are estimated, said prediction block ($pred^k$) being obtained on the basis of said first motion information item ($mv^k$),

- coding (E210, E240) said current block with reference to a previously coded-decoded image ($I^{k-1}_{ref}$) of the second view (k-1), during which at least one second motion information item ($mv^{k-1}$) which is representative of a displacement of said current block in said previously coded-decoded image ($I^{k-1}_{ref}$) of the second view (k-1) and one prediction residue information item ($res^{k-1}$) corresponding to a difference between the current block and a prediction block ($pred^{k-1}$) of said current block located in said reference image ($I^{k-1}_{ref}$) of the second view (k-1) are estimated, said prediction block ($pred^{k-1}$) being obtained on the basis of said motion information item ($mv^{k-1}$),

- obtaining (E220, E250) a difference information item ($d^{k,k-1}$) corresponding to a difference calculated between

a) a first reconstructed current block ($B^{k,k}_{rec}$) which was obtained on the basis of said reference image ($I^k_{ref}$) of the first view (k) and on the basis of said first motion information item ($mv^k$) and

b) a second reconstructed current block ($B^{k,k-1}_{rec}$) which was obtained on the basis of said reference image ($I^{k-1}_{ref}$) of the second view (k-1) and on the basis of said second motion information item ($mv^{k-1}$),

- losslessly coding (E23, E26) said calculated difference information item ($d^{k,k-1}$),

- coding said second motion information item ($mv^{k-1}$) and said prediction residue information items ($res^{k-1}$, $res^k$).

11. Coding method according to Claim 10, wherein said difference information item calculated between said first reconstructed block and said second reconstructed current block is obtained by selecting one mode from among the following modes, in accordance with a bitrate-distortion criterion:

- coding a signal which is representative of the result of subtracting said second reconstructed current block ($B^{k,k-1}_{rec}$) from said first reconstructed current block ($B^{k,k}_{rec}$),
- coding a signal which is representative of the result of subtracting said first reconstructed current block ($B^{k,k}_{rec}$) from said second reconstructed current block ($B^{k,k-1}_{rec}$),

said coding method comprising coding an information item which is representative of the selected mode.

12. Method for coding a video comprising at least a first view (k) and a second view (k-1) which is different from the first view, the coding method comprising, for at least one block of a current image of said first view (k), referred to as the current block:

- coding (E20) said current block with reference to a previously coded-decoded image ($I^k_{ref}$) of the first view (k) at an instant prior to a current coding instant, during which a first motion information item ($mv^k$) which is representative of a displacement of said current block in the previously coded-decoded image ($I^k_{ref}$) of the first view (k) and a prediction residue information item ($res^k$) corresponding to a difference between the current block and a prediction block ($pred^k$) of said current block, located in a reference image ($I^k_{ref}$) of the first view (k), are estimated, said prediction block ($pred^k$) being obtained on the basis of a motion information item ($mv^k$) which is representative of a displacement of said current block in said reference image ($I^k_{ref}$) of the first view (k),

- coding (E211, E241) said current block with reference to a previously coded-decoded image ($I^{k-1}_{ref}$) of the second view (k-1), during which at least one second motion information item ($mv^{k-1}$) which is representative of a displacement of said current block in the previously coded-decoded image ($I^{k-1}_{ref}$) of the second view (k-1) is estimated,

- obtaining (E221, E251) a difference information item ($d^{k,k-1}$) corresponding to a difference calculated between

a) said prediction block ($pred^k$) of said reference image ($I^k_{ref}$) of the first view (k) and
b) a prediction block ($pred^{k-1}$) of said reference image ($I^{k-1}_{ref}$) of the second view (k-1) obtained on the basis of said motion information item ($mv^{k-1}$) which is representative of a displacement of said current block in said reference image ($I^{k-1}_{ref}$) of the second view (k-1),

- losslessly coding (E23, E26) said calculated difference information item ($d^{k,k-1}$),
- coding said second motion information item ($mv^{k-1}$) and said prediction residue information item ($res^k$).

13. Coding method according to Claim 12, wherein said difference information item calculated between said prediction block ($pred^k$) of the reference image ($I^k_{ref}$) of the first view (k) and said prediction block ($pred^{k-1}$) of the reference image ($I^{k-1}_{ref}$) of the second view (k-1) is obtained by selecting one mode from among the following modes, in accordance with a bitrate-distortion criterion:

- coding a signal which is representative of the result of subtracting said prediction block ($pred^{k-1}$) of said reference image ($I^{k-1}_{ref}$) of the second view (k-1) from said prediction block ($pred^k$) of the reference image ($I^k_{ref}$) of the first view (k),
- coding a signal which is representative of the result of subtracting said prediction block ($pred^k$) of the reference image ($I^k_{ref}$) of the first view (k) from said prediction block ($pred^{k-1}$) of said reference image ($I^{k-1}_{ref}$) of the second view (k-1),

said coding method comprising coding an information item which is representative of the selected mode.

14. Device for coding a video comprising at least a first view (k) and a second view (k-1) which is different from the first view, the coding device being configured to, for at least one block of a current image of said first view (k), referred to as the current block:

- code said current block with reference to a previously coded-decoded image ($I^k_{ref}$) of the first view (k) at an instant prior to a current coding instant, a first motion information item ($mv^k$) which is representative of a displacement of said current block in the previously coded-decoded image ($I^k_{ref}$) of the first view (k) and a prediction residue information item ($res^k$) corresponding to a difference between the current block and a prediction block ($pred^k$) of said current block, located in a reference image ($I^k_{ref}$) of the first view (k) being estimated, said prediction block ($pred^k$) being obtained on the basis of said first motion information item ($mv^k$),
- code said current block with reference to a previously coded-decoded image ($I^{k-1}_{ref}$) of the second view (k-1), at least one second motion information item ($mv^{k-1}$) which is representative of a displacement of said current block in said previously coded-decoded image ($I^{k-1}_{ref}$) of the second view (k-1) and one prediction residue information item ($res^{k-1}$) corresponding to a difference between the current block and a prediction block ($pred^{k-1}$) of said current block located in said reference image ($I^{k-1}_{ref}$) of the second view (k-1) being estimated, said prediction block ($pred^{k-1}$) being obtained on the basis of said second motion information item ($mv^{k-1}$),
- obtain a difference information item ($d^{k,k-1}$) corresponding to a difference calculated between

a) a first reconstructed current block ($B^{k,k}_{rec}$) which was obtained on the basis of said reference image ($I^k_{ref}$) of the first view (k) and on the basis of said first motion information item ($mv^k$) and
b) a second reconstructed current block ($B^{k,k-1}_{rec}$) which was obtained on the basis of said reference image ($I^{k-1}_{ref}$) of the second view (k-1) and on the basis of said second motion information item ($mv^{k-1}$),

- losslessly code said calculated difference information item ($d^{k,k-1}$),
- code said second motion information item ($mv^{k-1}$) and said prediction residue information items ($res^{k-1}$, $res^k$).

15. Device for coding a video comprising at least a first view (k) and a second view (k-1) which is different from the first view, the coding device being configured to, for at least one block of a current image of said first view (k), referred to as the current block:

- code said current block with reference to a previously coded-decoded image ($I^k_{ref}$) of the first view (k) at an instant prior to a current coding instant, during which a first motion information item ($mv^k$) which is representative of a displacement of said current block in the previously coded-decoded image ($I^k_{ref}$) of the first view (k) and a prediction residue information item ($res^k$) corresponding to a difference between the current block and a prediction block ($pred^k$) of said current block, located in a reference image ($I^k_{ref}$) of the first view (k), are estimated, said prediction block ($pred^k$) being obtained on the basis of a motion information item ($mv^k$) which is representative of a displacement of said current block in said reference image ($I^k_{ref}$) of the first view (k),
- code said current block with reference to a previously coded-decoded image ($I^{k-1}_{ref}$) of the second view (k-1), during which at least one second motion information item ($mv^{k-1}$) which is representative of a displacement of said current block in said previously coded-decoded image ($I^{k-1}_{ref}$) of the second view (k-1) is estimated,
- obtain a difference information item ($d^{k,k-1}$) corresponding to a difference calculated between

  a) said prediction block ($pred^k$) of said reference image ($I^k_{ref}$) of the first view (k) and
  b) a prediction block ($pred^{k-1}$) of said reference image ($I^{k-1}_{ref}$) of the second view (k-1) obtained on the basis of said motion information item ($mv^{k-1}$) which is representative of a displacement of said current block in said reference image ($I^{k-1}_{ref}$) of the second view (k-1),

- losslessly code said calculated difference information item ($d^{k,k-1}$),
- code said second motion information item ($mv^{k-1}$) and said prediction residue information item ($res^k$).

**16.** Coded data stream which is representative of a video comprising at least a first view (k) and a second view (k-1) which is different from the first view, for at least one block of a current image of said first view (k), referred to as the current block, the data stream comprising at least:

  - a first motion information item ($mv^k$) which is representative of a displacement of said current block in a reference image ($I^k_{ref}$) of the first view (k),
  - a second motion information item ($mv^{k-1}$) which is representative of a displacement of said current block in a reference image ($I^{k-1}_{ref}$) of the second view (k-1),
  - a prediction residue information item ($res^{k-1}$) corresponding to a difference between the current block and a prediction block ($pred^{k-1}$) of said current block located in said reference image ($I^{k-1}_{ref}$) of the second view (k-1), said prediction block ($pred^{k-1}$) being obtained on the basis of said second motion information item ($mv^{k-1}$),
  - a prediction residue information item ($res^k$) corresponding to a difference between the current block and a prediction block ($pred^k$) of the current block, located in a reference image ($I^k_{ref}$) of the first view (k), said prediction block ($pred^k$) being obtained on the basis of said first motion information item ($mv^k$),
  - a difference information item ($d^{k,k-1}$) corresponding to a difference calculated between

  a) a first reconstructed current block ($B^{k,k}_{rec}$) which was obtained on the basis of said reference image ($I^k_{ref}$) of the first view (k) and on the basis of said first motion information item ($mv^k$) and

  b) a second reconstructed current block ($B^{k,k-1}_{rec}$) which was obtained on the basis of said reference image ($I^{k-1}_{ref}$) of the second view (k-1) and on the basis of said second motion information item ($mv^{k-1}$), said difference information item being coded losslessly.

**17.** Coded data stream which is representative of a video comprising at least a first view (k) and a second view (k-1) which is different from the first view, for at least one block of a current image of said first view (k), referred to as the current block, the data stream comprising at least:

  - a first motion information item ($mv^k$) which is representative of a displacement of said current block in a reference image ($I^k_{ref}$) of the first view (k),
  - a second motion information item ($mv^{k-1}$) which is representative of a displacement of said current block in a reference image ($I^{k-1}_{ref}$) of the second view (k-1),
  - a prediction residue information item ($res^k$) corresponding to a difference between the current block and a prediction block ($pred^k$) of said current block, located in a reference image ($I^k_{ref}$) of the first view (k), said prediction block ($pred^k$) being obtained on the basis of said first motion information item ($mv^k$) which is representative of a displacement of said current block in said reference image ($I^k_{ref}$) of the first view (k),
  - a difference information item ($d^{k,k-1}$) corresponding to a difference calculated between

  a) said prediction block ($pred^k$) of said reference image ($I^k_{ref}$) of the first view (k) and
  b) a prediction block ($pred^{k-1}$) of said reference image ($I^{k-1}_{ref}$) of the second view (k-1) obtained on the basis of said motion information item ($mv^{k-1}$) which is representative of a displacement of said current block in said reference image ($I^{k-1}_{ref}$) of the second view (k-1), said difference information item being coded losslessly.

**18.** Computer program comprising instructions for implementing the decoding method according to any one of Claims 1 to 7, or for implementing the coding method according to any one of Claims 10 to 13, when said program is executed by a computer.

**19.** Computer-readable storage medium on which a computer program comprising program code instructions for executing the steps of the decoding method according to any one of Claims 1 to 7, or for implementing the coding method according to any one of Claims 10 to 13, when said program is executed by a computer, is stored.

FIG. 1

FIG. 6A

FIG. 6B

FIG. 5A

FIG. 5B

FIG. 5C

FIG. 3

FIG. 2B

FIG. 2A

FIG. 4A

FIG. 4B

FIG. 7A

FIG. 7B

EP 3 542 533 B1

Flx →→ D →→ Q⁻¹ →→ T⁻¹

$mv^k$

$res^k$

$mv^{k-1}$

$d^{k,k-1}$

$mv^{k-1}$

$d^{k,k-1}$

$res^k$

P $pred^{k-1}$

+ → $B^{k,k}_{rec}$

DPB

$I^{k-1}_{ref}$

## FIG. 7C

COD

MEM COM

PG

UT

PROC

## FIG. 8

DEC

MEM0 COM0

PG0

UT0

PROC0

## FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Merge Frame Design for Video Stream Switching Using Piecewise Constant Functions. **DAI WEI et al.** IEEE TRANSACTIONS ON IMAGE PROCESSING. IEEE SERVICE CENTER, 01 Août 2016, vol. 25, 3489-3504
- Low-delay View Random Access for Multi-view Video Coding. **YANWEI LIU et al.** CIRCUITS AND SYSTEMS, 2007. ISCAS 2007. IEEE INTERNATIONAL SYMPOSIUM O N. IEEE, 01 Mai 2007, 997-1000

- **GAI-MAN CHEUNG et al.** Distributed Source Coding Application to Low-Delay Free Viewpoint Switching in Multiview Video Compression (Abstract). *26. PICTURE CODING SYMPOSIUM;7-11-2007 - 9-11-2007; LISBON,* 07 Novembre 2007